Europäisches Patentamt

European Patent Office

Office européen des brevets

(11) Numéro de publication : **0 359 624 B1**

(12) **FASCICULE DE BREVET EUROPEEN**

(45) Date de publication du fascicule du brevet :
13.05.92 Bulletin 92/20

(51) Int. Cl.⁵ : **B64C 27/54**

(21) Numéro de dépôt : **89402417.3**

(22) Date de dépôt : **05.09.89**

(54) **Dispositif de commande inviduelle du pas des pales de rotors de giravions, par vérins linéaires tournants.**

(30) Priorité : **16.09.88 FR 8812142**

(43) Date de publication de la demande :
**21.03.90 Bulletin 90/12**

(45) Mention de la délivrance du brevet :
**13.05.92 Bulletin 92/20**

(84) Etats contractants désignés :
**DE GB IT**

(56) Documents cités :
**FR-A- 2 607 465**
**US-A- 4 379 678**
**JOURNAL OF THE AMERICAN HELICOPTER SOCIETY, vol. 27, no. 3, juillet 1982, pages 25-31, New York, US; K.F. GUINN: "Individualblade control independent of a swashplate"**

(73) Titulaire : **AEROSPATIALE Société Nationale Industrielle**
**37, Boulevard de Montmorency**
**F-75781 Paris Cédex 16 (FR)**

(72) Inventeur : **Aubry, Jacques Antoine**
**2 Avenue Marie Gaspet**
**F-13480 Cabries (FR)**
Inventeur : **Mondet, Jean Joseph**
**839 route de Lambesc**
**F-13390 Pelisanne (FR)**

(74) Mandataire : **Bérogin, Francis et al**
**c/o CABINET HARLE & PHELIP 21 rue de la Rochefoucauld**
**F-75009 Paris (FR)**

## Description

La présente invention concerne un dispositif de commande individuelle du pas des pales des rotors, en particulier principaux ou sustentateurs, des giravions ou, plus généralement, des aérodynes à voilure au moins partiellement tournante; tels que les hélicoptères et les aérodynes de types dits "convertibles" ou "combinés".

L'invention se rapporte plus précisément à un dispositif de commande individuelle du pas des pales de rotors par des vérins linéaires tournants, dont chacun commande la position de l'une des pales du rotor autour de son axe de changement de pas, de façon à assurer en repère tournant et pour chaque pale, sa commande de pas général ou collectif et de pas monocyclique, à laquelle peut être ajoutée, si nécessaire, une commande de pas multicyclique.

Le dispositif selon l'invention est essentiellement destiné à l'équipement des rotors principaux d'hélicoptères ou de combinés et des hélices basculantes ou rotors basculants des aérodynes convertibles, qui sont des rotors à pas variable, afin de permettre la commande des pales de ces rotors de façon, d'une part, à assurer un pilotage analogue au pilotage classique du ou des rotors considérés par introduction du pas général ou collectif, qui est constant quel que soit l'azimut d'une pale donnée en rotation mais variable simultanément pour toutes les pales d'un rotor, et également du pas cyclique ou monocyclique, qui varie sinusoïdalement sur un tour de rotation de ladite pale, et, d'autre part, à pouvoir éventuellement surajouter aux variations du pas général et du pas monocyclique, une variation dynamique quelconque du pas pour assurer la commande multicyclique du ou des rotors considérés.

Une telle commande indépendante de chaque pale permet, d'une part, d'optimiser la commande monocyclique du ou des rotors et, d'autre part, par l'intermédiaire de la commande multicyclique des pales, d'introduire sur le ou les rotors un système de contrôle actif des vibrations, ces dispositions apportant une grande efficacité anti-vibratoire et des gains notables de performances, en particulier aux grandes vitesses.

On sait que le pilotage des hélicoptères est obtenu, de manière classique, d'une part, par la commande du pas général des pales de chaque rotor principal, cette commande permettant de faire varier la portance d'ensemble du rotor, et, d'autre part, par la commande monocyclique du pas des pales de chaque rotor principal, permettant d'incliner le disque du rotor, la combinaison de ces deux commandes sur l'incidence de ces pales ayant comme résultat la possibilité de faire varier l'amplitude et l'inclinaison de l'effort moyen résultant développé par le rotor et, en conséquence, de piloter l'hélicoptère que ce rotor sustente.

Ces commandes classiques sont introduites, sur la plupart des hélicoptères qui volent à ce jour, par l'intermédiaire d'un dispositif complexe à plateaux cycliques, ces plateaux permettant d'engendrer simultanément sur les pales du rotor principal, d'une part, la commande du pas général des pales par le déplacement axial des plateaux cycliques suivant l'axe du rotor, et, d'autre part, la commande sinusoïdale du pas ou commande monocyclique, dont la pulsation est égale au régime de rotation du rotor, par le basculement angulaire de ces plateaux cycliques par rapport à l'axe du rotor.

Généralement, les plateaux cycliques, utilisés pour commander la variation du pas des pales d'un rotor de giravion tel qu'un hélicoptère, sont montés autour du mât rotor et comprennent un plateau tournant relié par des biellettes aux leviers de commandes de pas des pales du rotor, et entraîné par le moyeu ou le mât du rotor, et par l'intermédiaire d'au moins un compas de liaison, en rotation autour de l'axe du mât rotor, ce plateau tournant étant monté en rotation à l'aide d'au moins un roulement à billes sur un plateau non-tournant, monté autour du mât rotor et coulissant axialement le long de ce dernier, sous l'action d'un levier de pas collectif manoeuvré par le pilote, le plateau non-tournant étant également articulé par rapport au mât rotor à l'aide d'une rotule, de sorte que les plateaux puissent osciller dans tous les sens autour de la rotule, par l'action de bielles des commandes pilote sur le plateau non-tournant, cette action étant commandée à partir du manche cyclique manoeuvré par le pilote.

Les modes de fonctionnement et de commande des pales des rotors principaux d'hélicoptères sont à l'origine d'excitations vibratoires très supérieures à celles relevées sur les avions de transport. La cause principale de ces excitations vibratoires élevées est le rotor principal des hélicoptères, sur lequel les vitesses aérodynamiques et incidences variables induites sur les pales, au cours de leur rotation, en particulier en vol d'avancement, développent des efforts aérodynamiques et dynamiques alternés importants, qui, après transmission au fuselage de l'hélicoptère par l'intermédiaire du moyeu, se traduisent par des accélérations périodiques élevées, surtout à grande vitesse de déplacement de l'hélicoptère. Ces vibrations sont d'autant plus élevées que la charge du rotor (masse, facteur de charge) et la vitesse d'avancement sont importantes. Ces vibrations ont pour conséquence principale de réduire le confort dans la cabine de l'hélicoptère, de provoquer une fatigue accrue de l'équipage, notamment lors de missions de longue durée, de développer des contraintes dynamiques élevées dans le moyeu et la structure de l'hélicoptère, ce qui provoque une fatigue du matériel et des équipements qui lui sont rattachés.

Indépendamment de l'optimisation dynamique des rotors et des structures, les moyens utilisés à ce jour pour limiter ces phénomènes vibratoires sont des moyens essentiellement passifs, du type anti-vibreur ou suspensions, disposés au niveau de la tête de rotor, au niveau de la liaison entre rotor et fuselage, ainsi que sur le fuselage lui-même. Parallèlement aux moyens passifs, dont l'avenir semble limité, du fait que leur masse risque d'être rédhibitoire pour satisfaire aux exigences de plus en plus sévères en matière de confort, associées aux vitesses de croisière de plus en plus élevées des hélicoptères modernes, des moyens actifs de contrôle des vibrations sont également étudiés et développés.

Comme cas particulier de ces moyens actifs de contrôle des vibrations, il a déjà été proposé d'utiliser une commande multicyclique, dont le principe d'action dans cette application, consiste à développer des efforts alternés qui, au niveau du rotor principal, s'oppose aux efforts générateurs de vibrations.

Par rapport à une commande de pas monocyclique, classiquement introduite par des plateaux cycliques, une commande multicyclique (ou harmonique) est une commande plus élaborée, contenant plusieurs harmoniques du régime de rotation. Il a, en outre, été déjà proposé d'utiliser une telle commande multicyclique non seulement pour diminuer les contraintes ou les régimes vibratoires, mais également pour rechercher l'amélioration des qualités de vol, pour reculer les limites du domaine de vol et obtenir des gains en performances, notamment par le contrôle du décrochage sur la ou les pales reculantes du rotor principal considéré.

Il a de plus été noté qu'une commande multicyclique du rotor principal d'un hélicoptère, en tant que système de contrôle actif des vibrations, se prête favorablement à une intégration dans un système de commandes de vol électriques, permettant d'assurer un contrôle automatique généralisé de l'hélicoptère.

Dans un premier mode connu de mise en oeuvre, il a été proposé d'introduire la commande multicyclique au niveau des bielles de commande du plateau non-tournant d'un dispositif classique à plateaux cycliques, de sorte que la commande multicyclique soit simplement ajoutée à la commande générale et monocyclique classique, correspondant à une constante en repère fixe, c'est-à-dire sans prendre en considération la rotation autour de l'axe du rotor. Une telle réalisation conserve la chaîne de commande monocyclique classique à plateaux cycliques et bielles de pas, à laquelle on rajoute des actionneurs linéaires multicycliques, tels que des vérins électrohydrauliques, appelés vérins "multicycliques", qui sont mis en série sur les servo-commandes classiques, à entrée mécanique, du déplacement longitudinal et de l'inclinaison du plateau non-tournant. Ainsi, par un choix judicieux de l'amplitude et de la phase des commandes envoyées sur les trois vérins multicycliques, on peut donc s'opposer à la génération des vibrations au niveau du rotor principal.

Par opposition à une telle superposition, en repère fixe, d'une commande monocyclique classique et d'une commande multicyclique, il a également été déjà proposé d'effectuer la commande multicyclique par une commande directe, en repère tournant, à l'aide de dispositifs d'actionnement qui tournent chacun avec une pale dont le pas est commandé.

Parmi les différentes réalisations de ce type, qui ont été présentées dans un article de Monsieur Kenneth F. GUINN, intitulé "Commande Individuelle de pales indépendante d' un plateau cyclique" (Individuel Blade Control Independant of a Swash-plate) et publié dans le numéro de Juillet 1982 du "Journal of American Helicopter Society", l'une comporte, pour chaque pale du rotor considéré, un actionneur linéaire monté à l' extérieur du mât rotor et le long de la partie supérieure de ce dernier, et articulé, par son extrémité supérieure, sur une attache tournant avec le mât rotor, et par son extrémité inférieure, sur un levier, tournant également avec le mât rotor et monté pivotant sur ce dernier autour d'un axe perpendiculaire à l'axe de ce mât. Ce levier pivotant, propre à chaque pale, est articulé, d'une part, sur l'extrémité supérieure d'une bielle inférieure de commande de pas, dont l'extrémité inférieure est entraînée avec le plateau tournant du dispositif à plateaux cycliques, et, d'autre part, sur l'extrémité inférieure d'une bielle supérieure de commande de pas, dont l'extrémité supérieure actionne le levier de commande du pas de la pale correspondante.

Cette réalisation, dans laquelle la commande multicyclique est appliquée en repère tournant par des actionneurs linéaires, qui sont des vérins hydrauliques, tournant avec le rotor autour de son axe et alimentés par des organes d'alimentation en puissance également entraînés en rotation avec le mât rotor et logés au moins partiellement dans ce dernier, conserve donc également la chaîne de commande générale et monocyclique classique, avec ses plateaux cycliques et ses bielles de commande de l'inclinaison et de la translation du plateau non-tournant, la commande multicyclique étant appliquée en parallèle à la commande monocyclique sur la partie supérieure de cette chaîne de commande classique conservée.

Cependant, les deux réalisations de l'état de la technique plus précisément mentionnées ci-dessus ont pour inconvénient qu'il faut ajouter des actionneurs linéaires et leurs circuits de commande en puissance à un dispositif à plateaux cycliques, déjà lourd, encombrant et complexe par lui-même, et qu'il est nécessaire de plus de renforcer notablement les plateaux cycliques eux-mêmes. Ceci revient donc à augmenter le coût, la complexité et le poids d'une telle installation, montée autour du mât rotor.

En outre, la présence des vérins multicycliques et des conduites d'alimentation en saillie autour du mât rotor et soit au-dessus soit au-dessous des plateaux cycliques a pour effet d'augmenter la trainée aérodynamique, soit entre les plateaux cycliques et le dessous du rotor, dans une mesure qui peut éventuellement perturber le rendement aérodynamique de la tête de rotor, soit entre les plateaux cycliques et la partie supérieure du fuselage, dans une mesure qui peut éventuellement perturber l'écoulement aérodynamique au niveau de l'entrée et/ou autour de la ou des turbines de l'hélicoptère.

Enfin, dans le cas de la réalisation précitée à vérins multicycliques en repère tournant, l'embiellage propre à chaque pale et constitué par les bielles inférieure et supérieure de commande de pas et par le levier oscillant sur le mât rotor et actionné par un vérin multicyclique correspondant, est un embiellage pénalisant non seulement en trainée, mais également en poids et en coût.

De plus, les articulations de cet embiellage, sollicitées par des efforts alternés importants à haute fréquence, peuvent être soumises à usure et introduire en conséquence des jeux incompatibles avec un fonctionnement correct de la commande multicyclique.

Les autres réalisations présentées dans l'article précité ne comprennent pas de chaîne de commande classique à plateaux cycliques, et certaines d'entre elles consistent en des agencements allongés comportant, en série, un vérin hydraulique linéaire, ses moyens d'alimentation hydraulique, sous forme de module, avec notamment une pompe hydraulique, ses moyens de commande électrique et/ou optique, notamment à bague collectrice, et une bielle d'actionnement du levier de commande de pas de la pale correspondante, ces agencements allongés étant disposés axialement soit à l'intérieur du mat rotor, soit à l'extérieur et le long de ce dernier, selon que l'on souhaite protéger ces agencements allongés du milieu ambiant, indépendamment des problèmes thermiques posés par leur fonctionnement, ou que l'on souhaite bénéficier du déplacement rotatif de ces agencements allongés autour du mât rotor, pour obtenir un effet de ventilateur améliorant leur refroidissement.

Dans le premier cas, qui impose un mât rotor tubulaire de grand diamètre interne, au moins dans sa partie inférieure, pour loger non seulement les vérins mais également leurs alimentations hydraulique et électrique et/ou optique, chaque bielle de commande de pas, également logée dans le mât, est articulée par son extrémité inférieure directement sur la tige du vérin correspondant, et par son extrémité supérieure sur un basculeur monté pivotant sur le bord supérieur du mât rotor, et actionnant le levier de commande du pas de la pale correspondante.

Dans le second cas, l'extrémité supérieure de la tige de chaque vérin est articulée sur un levier, monté pivotant sur le mât rotor et tournant avec lui, et sur lequel l'extrémité inférieure de la bielle de commande de pas correspondante est également articulée.

Cette configuration axiale, interne ou externe au mât rotor, n'ayant pas donné satisfaction, une autre configuration générale a également été proposée dans l'article précité, et consiste à disposer sur la tête de rotor les commandes qui comprennent, pour chaque pale et selon différents modes de réalisation, de un à quatre vérins hydrauliques linéaires, fixés selon l'envergure ou selon la corde de la pale correspondante, sur un bras radial de liaison de la pale au moyeu, et actionnant un ou deux leviers de commande de pas, de forme simple ou coudée, soit directement soit par l'intermédiaire de renvoi d'actionnement, chaque vérin étant alimenté par une pompe hydraulique qui peut être montée sur la partie centrale du moyeu, et elle-même alimentée par une canalisation interne au mât rotor. Une variante de cette configuration est décrite dans le brevet des Etats-Unis d'Amérique n° 4 379 678, et l'analyse de ce brevet et des autres variantes de cette configuration qui sont décrites dans l'article précité amène à constater que ces réalisations sont complexes, qu'elles posent des problèmes importants de montage et d'alignement, et qu'elles occasionnent un encombrement important sur la tête de rotor, du fait du montage non seulement des vérins électro-hydrauliques, mais également des circuits hydrauliques, avec leurs tuyauteries, pompes, réservoirs, filtres et clapets associés, et de circuits électriques et/ou optiques de génération et transmission d'ordres de commande, en des emplacements sur la tête de rotor où l'espace disponible est très limité, du fait de la présence des organes de liaison des pales au moyeu et d'autres organes, tels que des amortisseurs de trainée, par exemple.

Le but de l'invention est de proposer des perfectionnements aux dispositifs de commande individuelle du pas des pales qui sont du type comprenant des vérins linéaires tournants, disposés longitudinalement à l'extérieur du mât rotor, de sorte que ces dispositifs perfectionnés, tout en conservant les avantages d'une structure plus simple et bien moins coûteuse que les configurations à composants de commande regroupés sur la tête ou le moyeu de rotor, ou à vérins multicycliques combinés à une chaîne de commande classique à plateaux cycliques, présentent de plus, par rapport aux dispositifs de commande de pas connus de ce type, l'avantage de garantir une excellente tenue mécanique des organes rotatifs d'un tel dispositif, qui sont soumis à la force centrifuge, et une reprise des efforts qui les sollicitent, sans compliquer la transmission de fluide hydraulique et/ou d'ordres électriques ou optiques à ces organes.

Le but principal de l'invention est donc de proposer des dispositifs perfectionnés de commande individuelle de pas collectif, monocyclique et multicyclique en repère tournant, qui éliminent la chaîne de commande générale et monocyclique classique à plateaux cycliques, tout en remédiant aux inconvénients des dispositifs de ce type de l'état de la technique.

Un autre but secondaire de l'invention est de proposer un tel dispositif de commande de pas, dans lequel la reprise de la quasi totalité des efforts, notamment centrifuges, est assurée directement par un organe solidaire du mât rotor, et disponible à cet effet en raison de son aptitude à un dimensionnement approprié avec un maximum de rigidité.

Dans le cadre d'application, un autre but secondaire encore de l'invention est de proposer un tel dispositif de commande de pas, dont la vulnérabilité, l'encombrement et la traînée sont réduits par l'intégration de composants hydrauliques directement dans ledit organe solidaire du mât rotor.

Un autre but secondaire encore de l'invention est de proposer un tel dispositif de commande de pas, dans lequel l'utilisation de joints d'étanchéité dynamiques soit pratiquement limitée aux vérins hydrauliques équipant le dispositif, afin de simplifier la réalisation et la maintenance des circuits hydrauliques et d'en augmenter la fiabilité.

A cet effet, l'invention propose un dispositif de commande individuelle du pas des pales d'un rotor de giravion, du type comprenant, pour chaque pale du rotor, un vérin linéaire électro-hydraulique à double effet et au moins un corps, pour commander le pas collectif, monocyclique et, éventuellement, multicyclique en repère tournant de ladite pale, le vérin étant entraîné en rotation avec le rotor autour de l'axe de ce dernier, et disposé sensiblement longitudinalement par rapport au mât rotor, à l'extérieur de ce dernier, le dispositif de commande se caractérisant en ce que chaque vérin est implanté, par l'un des deux éléments que constituent son cylindre et sa tige, sur un support tournant, entourant le mât rotor et entraîné en rotation avec le rotor autour de l'axe de ce dernier, tandis que l'autre élément du vérin est relié au levier de commande de pas de la pale correspondante, ledit support tournant étant disposé sous le plan du rotor.

Il est clair que l'implantation des vérins dans le support tournant a pour effet d'améliorer la tenue mécanique de leurs constituants soumis à la force centrifuge, par la reprise des efforts s'exerçant sur chaque vérin directement dans le support tournant.

Avantageusement, pour améliorer cette reprise des efforts tout en assurant un bon guidage en rotation autour de l'axe du rotor, le support tournant est monté en rotation par au moins un roulement autour d'un support fixe, entourant le mât rotor et solidaire de la structure du giravion.

Afin de faciliter la réalisation d'un montage coaxial du support tournant et du support fixe autour du mât rotor, sans augmenter notablement l'encombrement du dispositif notamment autour de la base du mât rotor, il est de plus avantageux que le support fixe soit un support tubulaire, dans lequel le mât rotor est monté en rotation autour de son axe.

Le support tournant peut être solidaire du moyeu du rotor afin d'être entraîné en rotation par ce moyeu, mais, avantageusement, pour diminuer la traînée de la tête de rotor, le support tournant est solidaire du mât rotor et entraîné en rotation par ce dernier. Afin de diminuer encore l'encombrement, et donc la traînée du dispositif, et afin de plus de faciliter l'alimentation hydraulique des vérins tournants, chacun de ces derniers est intégré alors avantageusement par son cylindre dans le support tournant et relié par sa tige au levier de commande de pas correspondant. Egalement, la tige du vérin est accouplée par son extrémité supérieure au levier de commande de pas par une biellette à rotules, mais avantageusement encore, la tige du vérin est au moins partiellement tubulaire et ouverte du côté de son extrémité supérieure, de sorte que la biellette de commande de pas correspondante puisse être articulée, à son extrémité inférieure, et par une rotule, dans la tige tubulaire, afin que la liaison entre la biellette et la tige du vérin soit située à l'intérieur même du vérin, dans pratiquement toutes les positions relatives du cylindre et de la tige du vérin, pour éviter les moments secondaires dans les vérins, chaque biellette étant par ailleurs, articulée, par son extrémité supérieure, sur le levier de commande de pas correspondant.

Afin que les vérins de commande individuelle du pas des pales soient eux-mêmes commandés chacun par une boucle d'asservissement fermée, il est avantageux que la tige de chaque vérin soit engagée dans ou sur un capteur de déplacement linéaire de la tige de ce vérin, par rapport à son cylindre, ce capteur étant supporté par le support tournant et intégré à ladite boucle d'asservissement fermée.

Selon un mode de coopération avantageusement simple entre la tige d'un vérin et un capteur de déplacement linéaire de cette tige, cette dernière est montée coulissante, du côté de son extrémité inférieure, sur une tige fixée au support tournant et appartenant à ce capteur de déplacement linéaire.

De plus, préférentiellement encore, chaque corps de chaque vérin est alimenté en fluide hydraulique par au moins une servo-valve électro-hydraulique de commande, également montée en repère tournant et supportée par le support tournant. Ceci est avantageux pour assurer l'alimentation hydraulique des vérins et, dans cette configuration dans laquelle les servo-valves sont également des constituants soumis à la force centrifuge leur tenue mécanique est favorablement assurée par la reprise des efforts correspondants directement par le support tournant. Afin de favoriser cette reprise des efforts, il est avantageux que de plus ou moins une servo-valve, mais de préférence chacune d'elles, soit intégrée dans ou rapportée sur le support tournant. Ceci permet de plus de diminuer au maximum la longueur des canalisations hydrauliques de liaison entre les servo-valves et les vérins qu'elles commandent. Mais en outre, dans ce cas, il est avantageux que ces canalisations hydrauliques soient formées au moins partiellement par des canaux ménagés dans le support tournant, ce qui permet d'intégrer autant que possible ces canalisations directement dans le support tournant, de sorte qu'il n'est pas nécessaire de les réaliser à l'aide de tuyauteries rapportées à l'extérieur du support tournant, et de sorte également que la traînée aérodynamique et la vulnérabilité, vis-à-vis de phénomènes extérieurs au dispositif ainsi que vis-à-vis de la force centrifuge, sont considérablement diminuées.

Avantageusement de plus, les servo-valves sont elles-mêmes alimentées en fluide hydraulique à partir d'au moins un circuit hydraulique monté en repère fixe sur la structure du giravion, par l'intermédiaire d'au moins un collecteur hydraulique de transfert, au moins partiellement logé dans un support tournant. Ceci permet d'améliorer encore la reprise des efforts s'exerçant sur les différents composants du dispositif, directement dans le support tournant, tout en permettant d'assurer une alimentation hydraulique convenable des vérins et des servo-valves montés en repère tournant.

Avantageusement, pour les mêmes raisons que précédemment, au moins un collecteur hydraulique, mais de préférence chacun d'eux, est en communication avec au moins une servovalve, mais de préférence chacune de celles qui sont alimentées par chaque collecteur respectif, par des canalisations hydrauliques formées au moins partiellement, mais de préférence complètement, par des canaux ménagés dans le support tournant. Comme précédemment, cette mesure permet d'éviter le montage de conduites souples ou rigides, rapportées sur le support tournant, et diminue la traînée de l'ensemble ainsi que sa vulnérabilité, grâce à l'intégration des canaux d'alimentation hydraulique dans le support tournant.

On peut bénéficier des mêmes avantages au niveau du support fixe, par le fait qu'au moins un collecteur hydraulique, mais de préférence chacun d'eux, est en communication avec au moins un circuit hydraulique du giravion par des canalisations hydrauliques formées au moins partiellement par des canaux ménagés dans ce support fixe.

Afin de faciliter le raccordement aux circuits hydrauliques du giravion, il est avantageux que l'une au moins des canalisations reliant un collecteur hydraulique à l'un au moins de ces circuits, mais de préférence chacune d'elles, soit reliée à un bloc hydraulique de raccordement à ces circuits, ce bloc hydraulique étant fixé sur la structure du giravion et assurant l'alimentation à haute pression du collecteur et/ou le retour à basse pression à partir de ce dernier.

Pour assurer une intégration avantageuse des composants du dispositif, afin d'en diminuer l'encombrement et la vulnérabilité, au moins un collecteur hydraulique, mais de préférence chacun d'eux, est annulaire et intercalé entre le support tournant et le support fixe, dans l'un au moins desquels il est partiellement intégré. Dans une forme de réalisation avantageuse pour le guidage en rotation du support tournant sur le support fixe et pour la disposition du ou des collecteurs hydrauliques, l'un au moins de ces derniers, mais de préférence chacun d'eux, est implanté entre deux roulements espacés axialement autour du mât rotor, et par lesquels le support tournant est monté en rotation sur le support fixe.

Cette disposition se prête avantageusement à l'utilisation de collecteurs hydrauliques qui sont du type comportant chacun un joint de transfert rotatif de fluide hydraulique sous haute pression entre deux organes sensiblement coaxiaux, entraînés en rotation relative l'un dans l'autre, dont l'un est solidaire en rotation du support tournant et l'autre du support fixe. En particulier, de préférence un joint de transfert rotatif avantageusement utilisé est du type comportant deux organes annulaires de révolution sensiblement coaxiaux, dont l'un est en contact radial avec le support fixe par deux joints d'étanchéité statique, axialement espacés de part et d'autre d'une rainure de distribution ménagée de révolution sur cet organe, et en regard d'une rainure de distribution ménagée dans le support fixe, et dans laquelle débouche au moins un canal interne à ce dernier et en communication avec une canalisation d'alimentation à haute pression, l'autre organe du joint de transfert rotatif étant en contact radial avec le support tournant, également par deux joints d'étanchéité statique axialement espacés de part et d'autre d'une rainure de distribution, de révolution sur cet autre organe, et en regard d'une rainure de distribution présentée par le support tournant, et dans laquelle débouche au moins un canal interne à ce dernier, pour l'alimentation à haute pression d'au moins une servo-valve de commande d'un vérin, avec un faible jeu radial, une partie axiale de l'autre organe et portant une couronne de révolution en saillie axiale et radiale par rapport à l'organe qui la porte, et qui est engagée avec du jeu dans une gorge de révolution ménagée dans l'autre organe, en formant, en regard des deux organes et entre ces derniers, des fentes d'étanchéité radiales et coplanaires, s'étendant de part et d'autre d'une rainure de transfert de distribution, également de révolution, ménagée dans l'autre organe et en communication avec l'autre rainure de distribution de cet autre organe par au moins un canal interne à ce dernier, tandis que la couronne est percée d'un canal de transfert, débouchant, à une extrémité, en regard de la rainure de transfert de distribution, et, à l'autre extrémité, en regard d'un canal percé dans l'organe portant la couronne et en communication avec l'autre rainure de distribution de cet organe.

On peut ainsi bénéficier des nombreux avantages propres à ce type connu de joint de transfert rotatif de fluide hydraulique entre deux pièces en rotation relative l'une dans l'autre, ces avantages étant plus particulièrement qu'un tel type de joint de transfert travaille en frottements visqueux, en assurant de très faibles couples de frottements à grandes vitesses de rotation et hautes pressions de transfert, que les fentes d'étanchéité coplanaires peuvent être maintenues à des valeurs prédéterminées, et donc les organes du joint dans des positions prédéterminées, par un asservissement hydro-statique tolérant un jeu radial relativement important et un certain défaut d'alignement ou voilage entre le support tournant et le support fixe, que le dégagement de chaleur d'un tel joint de transfert en fonctionnement est relativement réduit, que les débits de fuite entre les deux organes en rotation relative du joint de transfert sont limités, que les contacts et les étanchéités entre les organes du joint de transfert rotatif et les supports tournant et fixe sont uniquement assurés par des joints d'étanchéité statique, de sorte que l'utilisation de joints d'étanchéité dynamique est limitée aux vérins du dispositif, et que la fiabilité est améliorée et la maintenance facilitée.

Avantageusement de plus, pour simultanément faciliter la réalisation de la canalisation hydraulique de retour à basse pression des servo-valves de commande des vérins vers le ou les circuits hydrauliques du giravion, et la recirculation des débits de fuite du ou des collecteurs hydrauliques, au moins un de ces derniers, mais de préférence chacun d'eux, comprend une chambre collectrice d'extrémité, délimitée entre les supports fixe et tournant, pour la récupération du débit de fuite du collecteur correspondant et dans laquelle débouchent, d'une part, au moins un canal interne au support tournant et en communication avec le retour à basse pression d'au moins une servo-valve, et, d'autre part, au moins un canal interne au support fixe et en communication avec une conduite de retour à basse pression vers au moins un circuit hydraulique.

Pour des raisons de sécurité, il est de plus avantageux que chaque vérin comprenne au moins deux corps en tandem, dont chacun est commandé par l'une respectivement d'un nombre égal de servo-valves de commande correspondant, dont chacune est elle-même alimentée par l'une respectivement d'un nombre égal de collecteurs hydrauliques, avantageusement superposés, et en communication chacun avec l'un respectivement d'un nombre égal de circuits hydrauliques du giravion. Ceci permet d'assurer une redondance de la commande.

Avantageusement enfin, chaque servo-valve de commande du vérin de chaque pale du rotor est elle-même commandée par des ordres provenant d'au moins un collecteur électrique et/ou optique, monté au moins partiellement en repère tournant dans et/ou sur le mât rotor, les ordres étant élaborés à partir de signaux délivrés par au moins un capteur de la position angulaire de la pale correspondante autour de son axe de changement de pas et/ou par au moins un capteur de déplacement linéaire de la tige du vérin correspondant par rapport à son cylindre.

L'invention sera mieux comprise, et d'autres avantages et caractéristiques de l'invention ressortiront à la lecture de la description donnée ci-dessous, à titre non limitatif, de plusieurs exemples de réalisation décrits en référence aux dessins annexés sur lesquels :

– la figure 1 est une vue schématique, en coupe axiale, d'une tête de rotor principal d'hélicoptère avec son mât rotor et équipé d'un dispositif de commande individuelle de pas selon l'invention,

– la figure 2 est une vue en coupe axiale d'un autre exemple de dispositif selon l'invention, monté de manière analogue autour du mât d'un rotor principal d'hélicoptère, avec l'assistance d'un support tournant, et

– la figure 3 est une coupe diamétrale partielle et schématique du collecteur hydraulique du dispositif de la figure 2.

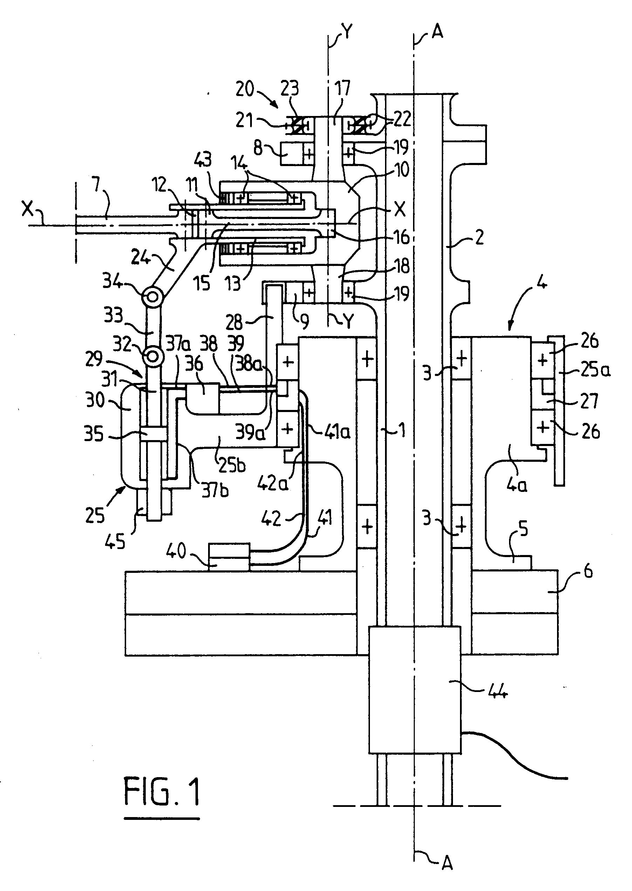

Le rotor principal d'hélicoptère représenté sur la figure 1 comprend un mât rotor tubulaire 1, qui est solidaire par son extrémité supérieure d'un moyeu 2, et monté en rotation par deux roulements 3, décalés longitudinalement par rapport à l'axe A du mât rotor 1, c'est-à-dire par rapport à l'axe de rotation du rotor, à l'intérieur d'un support de guidage 4 tubulaire et coaxial, et fixé par une bride radiale externe 5 de son extrémité inférieure sur la structure 6 de l'hélicoptère, à la partie supérieure du fuselage de ce dernier.

Par son extrémité inférieure, le mât rotor 1 est solidaire en rotation de l'arbre de sortie de la boîte de transmission principale (non représentée) de l'hélicoptère qui est également supportée par la structure de la partie supérieure du fuselage, de sorte que le mât rotor 1 et le moyeu 2 sont entraînés en rotation autour de l'axe A au-dessus du fuselage de l'hélicoptère.

Pour chacune des pales 7 du rotor, le moyeu 2 comprend deux plateaux radiaux supérieur 8 et inférieur 9, qui sont superposés et espacés axialement l'un de l'autre pour loger entre eux un manchon 10 de liaison de la pale 7 correspondante au moyeu 2. Le pied 11 de chaque pale 7 est retenu par deux broches diamétrales 12, perpendiculaire à l'axe longitudinal de la pale 7, dans un fourreau cylindrique 13, qui est monté coaxial et en rotation autour de son axe X-X dans l'alésage radial, par rapport à l'axe A, du manchon 10, grâce à deux roulements 14 décalés l'un de l'autre le long de l'axe X-X, et le pied 11 de la pale 7 est prolongé radialement vers l'axe A par un bras flexible et torsible 15, traversant axialement le fourreau 13 et dont l'extrémité radiale interne 16 est retenue dans le fond du manchon 10, autour d'un axe confondu avec l'axe de trainée Y-Y, parallèle à l'axe A du rotor, et autour duquel le manchon 10, et donc aussi le fourreau 13 et la pale 7 avec son pied 11 et son bras flexible et torsible 15, sont montés en rotation dans les plateaux supérieur 8 et inférieur 9 par des tourillons supérieur 17 et inférieur 18, solidaires du manchon 10 et engagés dans deux roulements 19 montés dans ces plateaux 8 et 9.

Les oscillations angulaires de la pale 7 et de son manchon 10 en trainée autour de l'axe Y-Y sont amorties et un rappel élastique vers une position initiale de repos de la pale 7 est assuré par un amortisseur de trainée 20, qui est, par exemple, du type comprenant une plaque métallique rigide et centrale 21, retenue sur le moyeu 2 et reliée par des couches d'élastomère visco-élastique 23 à chacune de deux plaques métalliques rigides et externes 22, entre lesquelles la plaque centrale 21 est intercalée, et qui sont retenues sur le manchon 10, par exemple au niveau du tourillon supérieur 17.

Chaque pale 7 est flexible en battement, de sorte qu'il est inutile de prévoir une articulation de battement au niveau de la liaison du manchon 10 au moyeu 2.

Enfin, les changements d'incidence de chaque pale 7 par rotation autour de son axe de changement de pas, confondu avec l'axe X-X du fourreau 13, sont permis par la rotation de ce fourreau 13 avec le pied de pale 11 dans le manchon 10, et par la déformation en torsion du bras de liaison 15, qui assure également un rappel vers une position initiale de la pale autour de son axe de pas X-X. Les changements de pas sont introduits sur la pale 7 par un levier de commande de pas 24 solidaire de l'extrémité radiale externe du fourreau 13 et en saillie vers le bas et latéralement sur ce fourreau 13.

Les changements de pas sont commandés par un dispositif de commande de pas collectif, monocyclique et multicyclique en repère tournant, qui comprend, en plus du support fixe 4, un support annulaire et tournant 25, entourant le support fixe 4, et dont une partie axiale et tubulaire 25a est montée coaxialement en rotation autour de la partie axiale supérieure et surépaissie 4a du support fixe 4, par deux roulements 26 décalés axialement l'un de l'autre, et entre lesquels est implanté un collecteur hydraulique annulaire 27, ainsi interposé entre les supports fixe 4 et tournant 25, et dont la fonction sera décrite ci-dessous.

Le support tournant 25 est entraîné en rotation par le plateau inférieur 9 du moyeu 2, auquel sa partie axiale 25a est rigidement liée par des doigts axiaux 28 qui la prolongent, et dont l'extrémité supérieure de chacun est directement ancrée dans la périphérie du plateau inférieur 9. Pour chaque pale 7, le support tournant 25 présente un bras radial 25b, dans l'extrémité radiale externe duquel est directement implanté le cylindre 30 d'un vérin de servo-commande 29, dont la tige 31 est articulée par une rotule 32 à son extrémité supérieure sur l'extrémité inférieure d'une biellette 33, elle-même articulée par une rotule 34, à son extrémité supérieure, sur l'extrémité libre du levier de commande de pas 24 de la pale correspondante. correspondante.

Ce vérin 29 est un vérin linéaire électro-hydraulique à double effet, à simple corps pour simplifier la description, dont la tige 31 porte un piston 35 monté coulissant avec étanchéité dans un alésage directement ménagé dans la partie radiale externe 30 du bras correspondant 25b du support tournant 25, qui forme le cylindre du vérin intégré dans ce support 25, et de sorte que le piston 35 délimite, dans l'alésage du cylindre 30 qui le loge, les deux chambres de travail du vérin, dont les volumes varient en sens opposé. Chacun de ces vérins 29, en nombre égal aux pales 7 du rotor, est alimenté en fluide hydraulique à haute pression par une servo-valve de commande 36, qui est directement accolée et fixée au bras 25b correspondant du support tournant 25 et au cylindre 30, et tourne avec eux, et qui est en communication avec chacune des deux chambres de travail du vérin 29 par l'une respectivement de deux canalisations hydrauliques 37a et 37b, formées par des canaux percés directement dans la partie du support tournant 25 formant le cylindre 30 du vérin 29 correspondant.

La servo-valve 36 est elle-même reliée à la partie, tournant avec le support tournant 25, d'un joint rotatif de transfert de fluide hydraulique, que comprend le collecteur hydraulique 27, par une conduite tournante d'alimentation hydraulique à haute pression 38 et une conduite tournante de retour hydraulique à basse pression 39, dont une partie de chacune est formée par un canal 38a ou 39a directement percé dans le support tournant 25.

De manière analogue, la partie du joint rotatif de transfert du collecteur hydraulique 27 qui est non-tournante avec le support fixe 4 est reliée à un bloc hydraulique 40, fixé sur la structure 6, par une conduite non-tournante d'alimentation à haute pression 41 et une conduite non-tournante de retour à basse pression 42, dont une partie de chacune est formée par un canal 41a ou 42a directement percé dans le support fixe 4.

Les parties des conduites hydrauliques 38, 39, 41 et 42 qui ne sont pas formées par des canaux percés dans l'un ou l'autre des supports tournant 25 et fixe 4 sont constituées par des tuyauteries flexibles ou rigides.

Le bloc hydraulique 40 comprend un étage d'alimentation hydraulique à haute pression et un étage de retour de fluide hydraulique à basse pression qui sont respectivement raccordés d'une part aux conduites 41 et 42, et, d'autre part, à l'un ou l'autre d'un circuit hydraulique de puissance principal et d'un circuit hydraulique de secours (non représentés) montés en repère fixe sur la structure de l'hélicoptère, par l'intermédiaire d'un clapet automatique de commutation, également logé dans le bloc 40 et assurant ainsi, en repère fixe, le couplage entre ces deux circuits hydrauliques.

Ainsi, chacun des vérins électro-hydrauliques de servo-commande 29, monté en repère tournant, est commandé par une servo-valve 36 elle-même montée en repère tournant et alimentée en fluide hydraulique à partir du bloc hydraulique 40, en repère fixe, par l'intermédiaire du collecteur hydraulique 27, implanté entre les supports tournant 25 et fixe 4.

La position angulaire de chaque pale 7 autour de son axe de changement de pas X-X est définie par une boucle d'asservissement fermée, comprenant des capteurs 43 de position angulaire, par exemple de type inductif connu, régulièrement répartis en direction circonférentielle à l'intérieur de l'extrémité radiale externe du manchon 10, et entre ce dernier et le fourreau 13 solidaire du pied de pale 11, dont les capteurs 43 détectent ainsi la position angulaire autour de son axe X-X par rapport au manchon 10. Ces capteurs 43 délivrent des signaux de sortie donnant la position angulaire en pas de chaque pale. Ces signaux sont transmis par voie optique et/ou électrique et par un collecteur 44 monté dans la base du mât rotor 1 à des calculateurs (non représentés) embarqués dans l'hélicoptère et qui élaborent des ordres de commandes à partir des déplacements des commandes de vol par le pilote ou à partir des ordres du pilote automatique. Ces ordres de commandes sont transmis par voie électrique et/ou optique à travers le collecteur 44 vers chacune des servo-valves 36 commandant elles-mêmes chacune un vérin électro-hydraulique 29.

De la sorte, chaque vérin tournant 29 permet d'introduire, sur le levier de commande de pas 24 de la pale correspondante 7, une commande de pas collectif et de pas monocyclique assurée en repère tournant. A cette commande, peut être ajoutée, toujour en repère tournant, une commande multicyclique par les mêmes vérins hydrauliques 29.

Les ordres de commandes muticycliques sont élaborés par des calculateurs embarqués à partir d'algorithmes introduits dans ces calculateurs. Ces ordres sont transmis par voie électrique et/ou optique vers chacune des servo-valves 36 à travers le collecteur 44 pour assurer la commande correspondante des vérins 29 afin d'actionner les leviers 24 faisant tourner les pales autour de leur axe de pas X-X.

Le retour d'information de la boucle d'asservissement est élaboré à partir des capteurs angulaires 43 situés sur le manchon de pale et éventuellement, en plus, par un capteur de déplacement linéaire 45 de la tige 31 de chaque vérin 29 par rapport au cylindre 30 correspondant, chaque capteur 45 étant monté sous le cyclindre 30 et traversé axialement par la partie d'extrémité inférieure de la tige 31 correspondante. Les indications électriques et/ou optiques des capteurs angulaires 43 et, éventuellement, des capteurs linéaires 45 sont transmises aux calculateurs de bord par l'intermédiaire du collecteur 44.

Par sécurité, les capteurs de rotation d'une pale 7 sont dupliqués ou tripliqués et connectés à des calculateurs eux-mêmes dupliqués ou tripliqués pour commander chacun l'un des moteurs-couple dupliqués ou tripliqués de l'étage de pilotage électrique de la servo-valve 36 correspondante.

De même, par sécurité, chacun des vérins de servo-commande 29 peut être un vérin à double corps, dont chaque corps est commandé par l'une respectivement de deux servo-valves telles que 36, alimentées chacune par l'un respectivement de deux collecteurs hydrauliques superposés, tels que 27, implantés entre les supports tournant 25 et fixe 4 et eux-mêmes alimentés en parallèle à partir du ou des circuits hydrauliques de l'hélicoptère. En variante, le collecteur électrique et/ou optique de transfert des ordres de commande depuis les calculateurs embarqués, en repère fixe sur l'hélicoptère, jusqu'aux servo-valves 36 en repère tournant, et des signaux de sortie des détecteurs 43 et 45, en repère tournant, jusqu' aux calculateurs embarqués, peut être monté au-dessus du mât rotor 1, sur le moyeu 2.

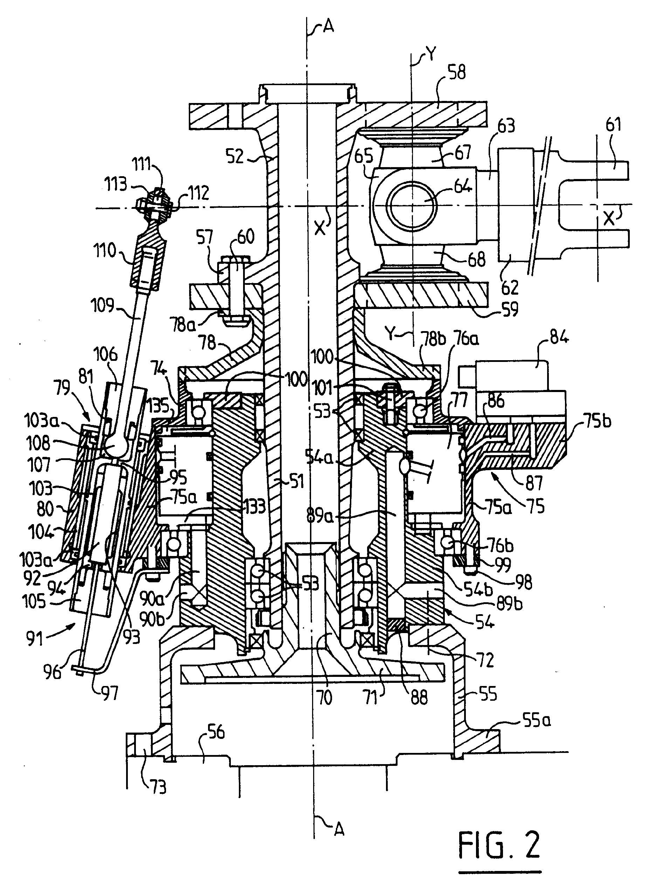

Sur le dispositif de commande de pas de la figure 2, on retrouve un support de guidage 54, tubulaire et fixe, dans lequel un mât rotor 51, solidaire d'un moyeu de rotor 52 à son extrémité supérieure, est monté en rotation autour de l'axe de rotation A du rotor par deux paires axialement espacées de roulements 53. Le mât rotor 51 est entraîné en rotation par des cannelures longitudinales internes de sa partie d'extrémité inférieure, en prise avec des cannelures longitudinales externes d'un arbre d'entraînement 70, emmanché dans la base du mât rotor 51 et muni d'une bride radiale externe 71, par laquelle cet arbre d'entraînement 70 est accouplé à l'arbre de sortie (non représenté) de la boîte de transmission principale, à l'intérieur d'une embase creuse de liaison à la structure 56 de l'hélicoptère, et formée d'un carter annulaire 55, sur lequel le support fixe 54 est retenu par une couronne de boulons s'étendant selon des axes parallèles à l'axe 72.

Ce carter 55 est fixé sur la structure 56 par une autre couronne de boulons (non représentés) dont chacun traverse un orifice tel que 73 percé dans une bride radiale externe 55a d'appui et d'encastrement sur la structure 56.

On retrouve également que le moyeu 52 comprend un plateau radial supérieur 58, qui est d'une seule pièce avec la partie centrale tubulaire du moyeu 52, elle-même d'une seule pièce avec le mât rotor 51 et dans le prolongement de ce dernier. Mais le plateau radial inférieur 59 du moyeu 52 est annulaire et rapporté par emmanchement autour du mât rotor 51, de façon à être maintenu en butée contre une bride radiale externe 57 du mât 51, par des liaisons boulonnées telles que 60. Chaque pale (non représentée) est retenue par son pied dans une chape radiale externe 61 d'un palier monté tourillonnant autour de l'axe X-X de changement de pas de la pale, dans un fourreau 62 d'extrémité radiale externe d'un manchon 63 de liaison de la pale au moyeu 52, ce manchon 63 étant lui-même monté oscillant par le pivot 64 autour de l'axe de battement, perpendiculaire à l'axe X-X et s'étendant dans le plan de rotation du rotor, sur un noyau 65. Ce noyau 65 est lui-même monté tourillonnant par les tourillons supérieur 67 et inférieur 68 dans les plateaux respectivement supérieur 58 et inférieur 59 du moyeu 52, autour de l'axe de trainée Y-Y de la pale.

On retrouve également un support tournant 75, monté coaxialement en rotation sur le support fixe 54 par deux roulements 76a et 76b, décalés axialement l'un de l'autre, et entre lesquels un collecteur hydraulique 77 est implanté, entre le support tournant 75 et le support fixe 54, pour alimenter des servo-valves telles que 84 solidaires du support tournant 75, donc montées en repère tournant, et dont chacune d'elles commande l'un de plusieurs vérins de servo-commande 79, en nombre égal au nombre de pales du rotor et implantés dans le support tournant 75. Le roulement supérieur 76a est monté entre l'extrémité supérieure d'une partie axiale tubulaire 54a du support fixe 54 et un couvercle annulaire 74 de fermeture de l'extrémité supérieure d'une partie axiale tubulaire 75a du support tournant 75, par l'intermédiaire d'une entretoise annulaire épaulée 100 et d'une couronne de vis 101 vissées dans le support fixe 54, tandis que le roulement inférieur 76b est monté entre un bord radial interne de l'extrémité inférieure de la partie axiale tubulaire 75a du support tournant 75 et la partie d'extrémité inférieure surépaissie 54b, en saillie radiale vers l'extérieur, du support fixe 54. De la sorte, le collecteur hydraulique annulaire 77 est logé dans les supports fixe 54 et tournant 75 et enveloppé en partie dans le support fixe 54 et en partie dans le support tournant 75. La partie axiale 75a de ce dernier porte, en saillie radiale vers l'extérieur, d'une part, pour chacune des servo-valves 84, un bloc-support 75b et d'autre part, pour chacun des vérins de servo-commande 79, c'est-à-dire pour chacune des pales (non représentées) du rotor, un bloc 80 aménagé en cylindre pour le vérin 79 correspondant.

L'entraînement du support tournant 75, en rotation autour de l'axe A, avec le mât rotor 51 et le moyeu 52, est assuré par un manchon d'entraînement 78, de forme générale tronconique, dont la petite base, en forme de collet cylindrique, entoure le mât rotor 51 juste sous le plateau inférieur 59 du moyeu 52, en l'appliquant contre la bride radiale 57 du mât 51, et présente des pattes radiales externes, telles que 78a, solidarisées chacune au plateau inférieur 59 et à la bride 57 par une liaison boulonnée 60 de fixation du plateau inférieur 59 au mât 51. A sa grande base, le manchon d'entraînement 78 présente une bride radiale externe 78b munie à la périphérie de sa face inférieure de cannelures radiales et recouvrant le couvercle 74, pour le maintenir en position en l'entraîner en rotation autour de l'axe A-A par des cannelures radiales correspondantes ménagées sur le dessus dudit couvercle 74.

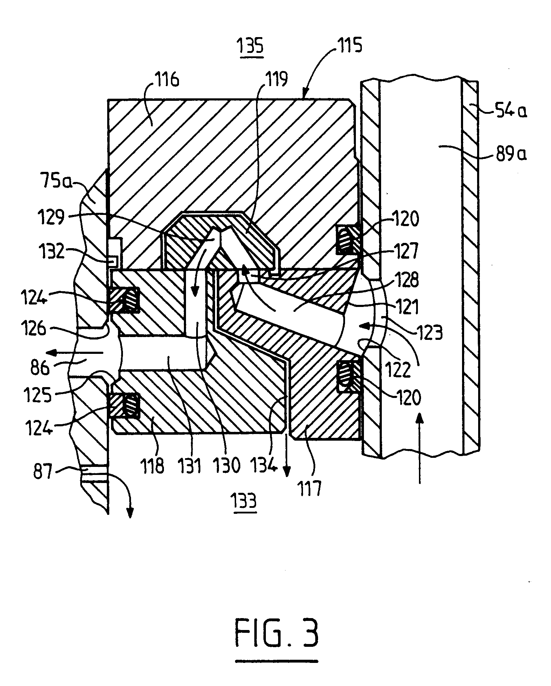

Chaque vérin 79 est, dans cet exemple également, un vérin linéaire électro-hydraulique à double effet, dont le cylindre 80 est ainsi directement intégré dans le support tournant 75 et dont la tige 81 porte un piston annulaire 103, en saillie radiale externe coulissant avec étanchéité dans une chemise 104 montée dans le cylindre 80 et entre deux joints d'étanchéité dynamiques 103a fermant les chambres de travail opposées du vérin 79. Dans cet exemple, la tige 81 du vérin est tubulaire et son volume interne est subdivisé en une grande chambre inférieure 105, s'ouvrant vers le bas à son extrémité inférieure, en saillie sous le cylindre 80, et en une petite chambre supérieure 106 s'ouvrant vers le haut à son extrémité supérieure, également en saillie, mais au-dessus du cylindre 80, et logeant un siège sphérique concave 107 dans lequel est retenue une rotule 108 de l'extrémité inférieure d'une bielle de commande de pas 109, de longueur réglable, dont l'extrémité supérieure est vissée dans un embout 110 à rotule 111 accouplée par un axe 112 dans une chape 113 d'extrémité d'un levier de commande de pas (non représenté) de la pale correspondante. Comme les deux chambres de travail du vérin 79 sont délimitées par le piston 103, les deux joints 103a et la chemise 104 dans un cylindre 80 qui est d'une seule pièce avec le carter annulaire 75a du support tournant 75, sur lequel est directement rapportée la servo-valve de commande 84 correspondante, la liaison hydraulique entre ces deux chambres du vérin 79 et la servo-valve 84 est assurée par des canalisations hydrauliques entièrement formées par des canaux percés dans le cylindre 80, dans le carter annulaire 75a et dans le bloc support 75b portant la servo-valve 84 correspondante. De même, la servo-valve 84 est reliée au collecteur hydraulique 77 par des canalisations hydrauliques formées entièrement par des canaux 86 et 87 percés dans ce même carter annulaire 75a et dans le bloc-support 75b correspondant. Ces canaux 86 et 87 sont représentés sur la figure 2 et partiellement sur la figure 3 en référence à laquelle on décrit à présent la structure du collecteur hydraulique 77, et sur laquelle est également représenté un canal 89a percé dans le support fixe 54, pour alimenter le collecteur hydraulique 77 en fluide hydraulique à haute pression, les canalisations hydrauliques d'alimentation à haute pression 86, 89a, 89b et de retour à basse pression 87, 90a, 90b étant plus complètement représentées sur la figure 2.

En effet, le collecteur hydraulique 77 utilisé est du type comprenant un joint de transfert rotatif de fluide hydraulique sous haute pression entre deux pièces montées l'une dans l'autre et en rotation relative à grande vitesse, ce joint de transfert rotatif étant par exemple tel que ceux commercialisés sous la dénomination "Rotostat" par la Société Glyco Industrie Automation, qui sont des joints rotatifs à gros débit transmettant essentiellement une pression statique, entre un carter annulaire et un organe tubulaire interne, qui sont entraînés en rotation relative l'un par rapport à l'autre, avec un faible débit de fuite et de faibles couples de frottement.

Une demi-coupe diamétrale d'un joint de transfert rotatif de ce type, implanté entre le carter annulaire 75a du support tournant 75 et la partie tubulaire axiale 54a du support fixe 54, est schématiquement représentée sur la figure 3. Ce joint de transfert rotatif 115 comprend essentiellement quatre organes annulaires 116, 117, 118 et 119, de révolution autour d'un axe commun qui est l'axe A du rotor, et tels que les organes 116 et 117, respectivement en position axiale supérieure entre les parties 54a et 75a des deux supports 54 et 75, et en position axiale inférieure et radiale interne autour de la partie 54a du support fixe 54, sont assemblés l'un à l'autre par des vis (non représentées) et sur la partie 54a du support fixe 54, contre lequel ils sont appliqués par deux joints d'étanchéité statique 120, espacés axialement de part et d'autre d'une rainure radiale interne de révolution 121, usinée dans l'organe 117 et en regard d'une rainure de révolution 122, usinée dans la face radiale externe de la partie 54a, et en communication par un orifice 123 percé dans cette partie 54a avec un canal longitudinal 89a également percé dans cette partie de support 54a, pour l'alimentation hydraulique sous haute pression. Les deux autres organes principaux du joint 115 sont un organe 118 en position axiale inférieure et radiale externe, qui entoure avec du jeu radial l'organe 117 lié au support fixe 54, et une couronne 119, qui est assemblée par des vis (non représentées) à l'organe 118, et est logée avec du jeu radial et axial dans une gorge ménagée dans la face radiale inférieure de l'organe 116, de sorte que la couronne 119 soit en saillie axiale au-dessus de l'organe 118 qui la porte et en saillie radiale vers l'intérieur par rapport à cet organe 118, et qu'elle s'étende au-dessus d'une partie radiale externe de la face supérieure de l'organe 117. De plus, la couronne 119 et l'organe 118 qui la porte sont assemblés au carter annulaire 75a du support tournant 75, contre lequel l'organe 118 est appliqué par deux joints d'étanchéité statique 124, axialement espacés de part et d'autre d'une rainure externe de révolution 125, usinée dans l'organe 118 en regard d'une rainure de révolution 126, usinée dans la face radiale interne du carter annulaire 75a du support tournant 75, et dans laquelle débouchent des canaux 86, percés dans ce carter 75a et dans les blocs supports 75b, et dont chacun assure l'alimentation hydraulique à haute pression d'une servo-valve 84 de commande d'un vérin 79.

La couronne 119 est liée avec un faible jeu axial, déterminé par une entretoise de faible épaisseur, à l'organe 118, de sorte que des fentes situées dans un même plan radial sont délimitées entre, d'une part, la couronne 119 et l'organe supérieur 116, et, d'autre part, les deux organes inférieurs 117 et 118, ces fentes coplanaires s'étendant radialement à l'intérieur et à l'extérieur d'une rainure de distribution 127, usinée de révolution dans la partie radiale externe de l'organe 117, en regard de la couronne 119, et en communication par un canal 128 percé dans l'organe 117 avec la rainure radiale interne 121 de cet organe 117. En regard de la rainure 127 débouche une extrémité d'un canal coudé 129 percé dans la couronne 119, et dont l'autre extrémité débouche en regard d'un canal 130 percé axialement dans l'organe 18, et en communication par un canal radial 131, également percé dans cet organe 118, avec la rainure radiale externe 125 présentée par cet organe 118.

Le fluide hydraulique sous pression arrive dans la partie annulaire 54a du support fixe 54 par le canal 89a interne à ce support et s'écoule par l'orifice 123 et la rainure 122 dans la rainure 121, d'où le fluide s'écoule par le canal 128 jusqu'à la rainure de distribution 127 de l'organe 117. De cette rainure de distribution 127, le fluide sous pression est transféré dans le canal 129 de la couronne 119, puis dans les canaux 130 et 131 de l'organe 118, jusqu'à la rainure 125 de ce dernier, d'où le fluide s'écoule dans la rainure 126 du carter annulaire 75a du support tournant 75, et de cette rainure, par les canaux 86 internes à ce carter 75a, jusqu'aux servo-valves 84. Comme la rainure de distribution 127 débouche dans le plan des fentes coplanaires précitées, il s'établit dans ces fentes, qui délimitent deux surfaces opposées de valeurs différentes sur la couronne 119 et les organes 117 et 118 en regard, une pression différentielle et un débit de fluide hydraulique à cette pression différentielle circule autour de la couronne 119, entre cette dernière et les parois et le fond de la gorge qui la loge. Sur les surfaces opposées délimitées par ces fentes coplanaires s'exercent d'une part la haute pression régnant dans la rainure de distribution 127 et d'autre part la pression différentielle engendrée par les fentes coplanaires, de sorte que, dans un état d'équilibre du joint, ces deux pressions engendrent deux forces opposées de valeur égale. Toute force externe qui tend à provoquer un déplacement relatif de la partie du joint 116, 117 en contact avec le support fixe 54 et de la partie du joint 118, 119 en contact avec le support tournant 75, entraîne une variation de la valeur des fentes coplanaires, donc une variation de la pression différentielle s'établissant dans ces fentes, de sorte que la résultante des forces s'exerçant sur les deux parties du joint tend à ramener ces deux parties en position d'équilibre. Il en résulte un asservissement hydro-statique maintenant les fentes coplanaires à une valeur prédéterminée et tolérant un jeu radial relativement important ainsi qu'un certain défaut d'alignement ou voilage du support tournant par rapport au support fixe. Le positionnement axial du joint 115 est assuré par l'application de la face supérieure de l'organe 118, solidaire en rotation du support tournant 75, contre une surface de butée plane du support tournant 75 en saillie radiale interne vers le support fixe 54, et telle que défini par exemple par l'épaulement radial 132 sur la figure 3, cet appui étant assuré par au moins un organe élastique, tel qu'une rondelle-ressort (non représentée) sollicitant l'organe 118 au niveau de sa face inférieure.

La canalisation de retour hydraulique à basse pression de chaque servo-valve 84 vers le collecteur hydraulique 77 est formée par un canal 87 percé dans le bloc support 75b correspondant et dans le carter annulaire 75a du support tournant 75, et débouchant dans une chambre collectrice à basse pression 133 ménagée dans le collecteur hydraulique 77, en-dessous du joint de transfert rotatif 115 et au-dessus du roulement inférieur 76b, et entre les parties 54a et 75a des supports fixe 54 et tournant 75. Cette chambre collectrice à basse pression 133, partiellement représentée sur la figure 3, recueille également le débit de fuite s'écoulant par le jeu radial 134 entre les deux organes 117 et 118 en position inférieure du joint 115. Il est également à noter que le fluide hydraulique s'écoulant entre l'organe dans la chambre supérieure 135 (voir figures 2 et 3) du collecteur hydraulique 77, au-dessus du joint 115 et sous le roulement supérieur 76a, cette chambre 135, en position supérieure, étant elle-même reliée à la chambre collectrice à basse pression 133, en position inférieure, par au moins un canal (non représenté) percé dans la partie 54a du support fixe 54.

Les joints de transfert rotatif de ce type, connus et brevetés au nom de Cyphelly, sont des joints travaillant en frottements visqueux et n'opposant que de très faibles couples de frottements, même lorsqu' ils fonctionnent à haute pression et grande vitesse de rotation.

Le retour du fluide hydraulique de la chambre collectrice à basse pression 133 du collecteur 77 vers le ou les circuits hydrauliques de l'hélicoptère est assuré par une canalisation de retour formée par des canaux internes au support fixe 54 et par une conduite flexible, de la manière décrite ci-dessous.

Ces canaux de retour, internes au support fixe 54, sont représentés sur la figure 2, et comprennent le canal axial 90a, percé dans la portion radiale externe de la base surépaissie 54b du support fixe 54, et débouchant vers le haut dans la chambre de retour à basse pression 133 du collecteur hydraulique 77, et vers le bas dans un canal radial 90b, percé dans la même portion radiale externe de la base 54b du support 54, et débouchant lui-même à l'extérieur du support fixe 54.

Un raccord de liaison étanche à une tuyauterie souple, non tournante et de gros diamètre pour assurer une bonne détente du fluide hydraulique de retour, est connecté de manière étanche et amovible dans le canal 90b, et l'autre extrémité de la tuyauterie souple est raccordée sur le retour du ou des circuits hydrauliques de l'hélicoptère par l'intermédiaire du bloc hydraulique précité (non représenté) fixé sur la structure de l'hélicoptère.

Pour alimenter le collecteur hydraulique 77, l'arrivée du fluide hydraulique à haute pression dans le canal 89a, interne à la partie axiale 54a et à la base 54b du support fixe 54, est assurée par un canal radial 89b, interne à la base 54b du support fixe 54, et débouchant, d'un côté, à l'extérieur de ce dernier, et de l'autre, dans le canal axial 89a, au-dessus d'un bouchon de fermeture 88 de dans le canal axial 89a, au-dessus d'un bouchon de fermeture 88 de l'extrémité inférieure de ce canal 89a.

Un raccord de liaison étanche à une tuyauterie, souple et non-tournante, est connecté de manière étanche dans le canal 89b et l'autre extrémité de la tuyauterie est raccordée à l'alimentation à haute pression du ou des circuits hydrauliques de l'hélicoptère par l'intermédiaire du bloc hydraulique précité fixé sur la structure.

Dans cet exemple, on constate que la reprise de la quasi intégralité des efforts s'exerçant sur les différents composants du dispositif de commande de pas, et notamment des efforts centrifuges, est directement assurée par le carter du support tournant 75. L'utilisation de joints d'étanchéité dynamiques est essentiellement limitée aux vérins de servo-commande et multicycliques 79, du fait que le collecteur hydraulique 77 comporte un joint de transfert rotatif 115 uniquement équipé de joints d'étanchéité statiques. L'intégration, dans les supports fixe 54 et tournant 75, des cylindres 80 des vérins 79, des canaux qui les relient aux servo-valves de commande 84, des canaux 86 et 87 reliant ces dernières au collecteur hydraulique 77, et des canaux 89a, 89b, 90a, 90b reliant ce dernier aux circuits hydrauliques de l'hélicoptère, diminue l'encombrement du dispositif et la trainée aérodynamique d'ensemble, tout en améliorant la protection de ces composants essentiels du dispositif.

Il est à noter que le dispositif selon l'invention permet de remplacer un dispositif de commande de pas classique, sans commande multicyclique, en une configuration avec commande multicyclique mais sans plateaux cycliques classiques. Le dispositif selon l'invention permet donc de rééquiper des hélicoptères existants. De plus, l'ensemble des vérins 79, des servo-valves de commande 84 et du collecteur hydraulique 77, intégré dans les supports fixe 54 et tournant 75, ne comporte aucun élément de raccordement rapporté, ce qui est une garantie de fiabilité. En outre, les éléments mécaniques du moyeu qui sont fortement sollicités en service, tels que les bielles de commande de pas, les manchons de liaison des pales au moyeu, ne supportent aucun élément mécanique supplémentaire dû à la commande multicyclique.

Dans l'exemple de la figure 2 comme dans celui de la figure 1, la commande électrique des servo-valves 84 est transmise par un collecteur électrique et/ou optique (non représenté) appartenant à une boucle d'asservissement fermée, qui est installée partiellement en repère tournant et comporte également des capteurs de position angulaire des pales autour de leur axe de pas ainsi que des capteurs de la course linéaire des tiges des vérins.

Dans l'exemple de la figure 2, chaque capteur 91 de la course linéaire de la tige 81 d'un vérin 79 par rapport au cylindre 80 correspondant est également d'un type inductif bien connu, et comprend une douille cylindrique 92, logée dans la grande chambre inférieure 105 de la tige tubulaire 81 du vérin, dans laquelle elle est maintenue par une chemise 93. Au montage, la douille 92 du capteur est d'abord introduite axialement dans la chemise 93, jusqu'à venir en butée par une extrémité contre un épaulement radial interne 94 de cette chemise 93. Puis, l'ensemble de la douille 92 et de la chemise 93 est introduit axialement dans la chambre 105 de la tige de vérin 81, jusqu'à ce que l'autre extrémité de la douille 92 vienne en butée contre une cloison transversale 95, interne à la tige 81 et séparant l'une de l'autre les deux chambres 105 et 106 de cette dernière. La chemise 93 est retenue dans la chambre 105 par exemple par vissage d'un filetage externe de cette chemise dans un taraudage de la chambre 105. Ainsi, la douille 92 et sa chemise 93 sont solidaires de la tige de vérin 81 dans ses déplacements axiaux par rapport au cylindre 80. Le capteur 91 comprend également une tige 96, fine, allongée et rectiligne, engagée axialement dans la douille 92, et dont l'extrémité inférieure est solidaire de l'extrémité inférieure d'un support rigide en S 97, fixé par son extrémité supérieure et par l'un d'un ensemble de boulons 98, contre une couronne 99 maintenue appliquée par les boulons 98 contre la face inférieure de la partie 75a du support tournant 75, de façon à retenir axialement la piste externe du roulement inférieur 76b.

Ainsi, la tige 96 tourne avec le support tournant 75, mais reste fixe par rapport au cylindre 80 correspondant, et la douille 92 du capteur 91 coulisse avec la tige de vérin 81 sur la tige 96 du capteur 91, de sorte que la position axiale instantanée de la douille 92, et donc de la tige de vérin 81, par rapport à la tige 96, et donc par rapport au cylindre 80, est détectée.

Dans les deux réalisations décrites ci-dessus, les vérins linéaires tournants, qui constituent les organes moteurs des commandes du pas général, du pas monocyclique et du pas multicyclique, sont implantés dans la périphérie d'un support tournant mais non oscillant et non coulissant, qui constitue une assise tournante suffisamment importante pour recevoir ces vérins et reprendre pratiquement la totalité des efforts auxquels ils sont soumis. De même, ce support tournant assure la reprise des efforts, notamment centrifuges, qui s'exercent sur les servo-valves ainsi que sur la partie tournante du ou des collecteurs hydrauliques, puisque ces organes sont également montés en repère tournant sur ce support. De plus, dans la réalisation de la figure 2, la position de la rotule 108 de liaison à la biellette 109, sensiblement à l'intérieur du vérin 79, du fait que cette rotule 108 est fixée directement dans la tige tubulaire 81 du vérin, permet d'éviter l'application de moments secondaires dans le vérin. Enfin, dans la réalisation de la figure 2 comme dans celle de la figure 1, il peut être nécessaire, pour des raisons de sécurité, que chaque vérin 79 soit un vérin à double corps en tandem, chaque corps étant alimenté par l'une respectivement de deux servo-valves associées au vérin, chaque servo-valve étant elle-même alimentée par 1 un respectivement de deux collecteurs hydrauliques indépendants, eux-mêmes reliés, de manière indépendante, à un double circuit hydraulique de l'hélicoptère.

Les variantes décrites ci-dessus du dispositif de commande individuelle du pas des pales selon l'invention présentent une importante simplification technologique par rapport aux dispositifs de commande de pas monocyclique en repère fixe et multicyclique en repère tournant comprenant une chaîne de commande classique à plateaux cycliques pour la commande du pas général et monocyclique, et à laquelle ont été rajoutés des vérins multicycliques, tout en conservant les avantages fonctionnels d'une telle solution connue.

Lorsqu'une commande multicyclique est ajoutée à une commande de pas collectif et monocyclique, et appliquée à chaque pale par un vérin de commande directe et individuelle du pas de cette pale, les dispositifs selon l'invention permettent de rechercher une maximisation de portance à puissance égale et/ou une minimisation de puissance, à portance égale. Ils permettent également de rechercher une meilleure répartition de la portance développée sur une pale au cours de sa rotation autour de l'axe du rotor, ce qui peut conduire à une quasi suppression des zones de décrochage des pales.

D'une manière générale, ces dispositifs de commande de pas assurent des gains de performances aux fortes charges et/ou aux grandes vitesses, et assurent des réductions importantes des niveaux vibratoires.

## Revendications

1. Dispositif de commande individuelle du pas des pales (7) d'un rotor de giravion, comprenant pour chaque pale (7) du rotor, un vérin (29) linéaire, électro-hydraulique, à double effet et au moins un corps pour commander le pas collectif, monocyclique et, éventuellement, multicyclique en repère tournant de ladite pale, ledit vérin (29) étant entraîné en rotation avec le rotor, autour de l'axe (A) de ce dernier, et disposé sensiblement longitudinalement par rapport au mât rotor (1), et à l'extérieur de ce dernier, caractérisé en ce que chaque vérin (29) est implanté, par l'un des deux éléments que constituent son cylindre (30) et sa tige (31), sur un support tournant (25), entourant le mât rotor (1) et entraîné en rotation avec le rotor autour de l'axe (A) de ce dernier, tandis que l'autre élément du vérin (29) est relié au levier de commande de pas (24) de la pale correspondante, ledit support tournant (25) étant disposé sous le plan du rotor.

2. Dispositif de commande de pas selon la revendication 1, caractérisé en ce que ledit support tournant (25) est monté en rotation par au moins un roulement (26) autour d'un support fixe (4), entourant le mât rotor (1) et solidaire de la structure (6) du giravion.

3. Dispositif de commande de pas selon la revendication 2, caractérisé en ce que ledit support fixe (4) est un support tubulaire dans lequel ledit mât (1) est monté en rotation (3) autour de son axe (A).

4. Dispositif de commande de pas selon l'une des revendications 1 à 3, caractérisé en ce que ledit support tournant (25) est solidaire du moyeu (2) du rotor et entraîné en rotation par ledit moyeu (2).

5. Dispositif de commande de pas selon l'une des revendications 1 à 3, caractérisé en ce que le support tournant (75) est solidaire du mât-rotor (51) et entraîné en rotation par ce dernier.

6. Dispositif de commande de pas selon l'une des revendications 1 à 5, caractérisé en ce que chaque vérin (29) est intégré par son cylindre (30) dans ledit support tournant (25) et relié par sa tige (31) audit levier de commande de pas correspondant.

7. Dispositif de commande de pas selon la revendication 6, caractérisé en ce que la tige (31) du vérin (29) est accouplé par l'intermédiaire d'une bielle (33) au levier (24) de commande de pas correspondant.

8. Dispositif de commande de pas selon la revendication 6, caractérisé en ce que la tige (81) du vérin (79) est au moins partiellement tubulaire et ouverte du côté de son extrémité supérieure, et en ce qu'une bielle de commande de pas (109) est articulée, à son extrémité inférieure et par une rotule (108) dans la tige tubulaire (81), et par son extrémité supérieure (111) sur le levier (113) de commande de pas correspondant.

9. Dispositif de commande de pas selon l'une des revendications 1 à 8, caractérisé en ce que la tige (31) du vérin (29) est engagée dans ou sur un capteur (43) de déplacement linéaire de ladite tige (31) par rapport audit cylindre (30), ledit capteur (43) étant supporté par ledit support tournant (25).

10. Dispositif de commande de pas selon la revendication 9 telle que rattachée à la revendication 6, caractérisé en ce que, du côté de son extrémité inférieure, la tige (81) du vérin (79) est montée coulissante sur une tige (96) fixée au support tournant (75) et appartenant à un capteur (91) de déplacement linéaire de la tige (81) du vérin (79) par rapport au cylindrique (80) correspondant.

11. Dispositif de commande de pas selon l'une des revendications 1 à 10, caractérisé en ce que chaque corps de chaque vérin (29) est alimenté en fluide hydraulique par au moins une servo-valve (36) électro-hydraulique de commande, également montée en repère tournant et supportée par ledit support tournant (25).

12. Dispositif de commande de pas selon la revendication 11, caractérisé en ce qu'au moins une servo-valve (36) est intégrée dans ou rapportée sur ledit support tournant (25).

13. Dispositif de commande de pas selon l'une des revendications 11 et 12, caractérisé en ce qu'au moins une servo-valve (36) est reliée au vérin (29) qu'elle commande par des canalisations hydrauliques (37a, 37b) formées au moins partiellement par des canaux ménagés dans ledit support tournant (25).

14. Dispositif de commande de pas selon l'une des revendications 11 à 13, caractérisé en ce que les servo-valves (36) sont alimentées en fluide hydraulique à partir d'au moins un circuit hydraulique monté en repère fixe sur la structure (6) du giravion par l'intermédiaire d'au moins un collecteur hydraulique de transfert (27) au moins partiellement logé dans ledit support tournant (25).

15. Dispositif de commande de pas selon la revendication 14, caractérisé en ce qu'au moins un collecteur hydraulique (27) est en communication avec au moins une servo-valve (36) par des canalisations hydrauliques (38, 39) formées au moins partiellement par des canaux (38a, 39a) ménagés dans ledit support tournant (25).

16. Dispositif de commande de pas selon l'une des revendications 14 et 15, telle que rattachée à la revendication 2, caractérisé en ce qu'au moins un collecteur hydraulique (27) est en communication avec au moins un circuit hydraulique du giravion par des canalisations hydrauliques (41, 42) formées au moins partiellement par des canaux (41a, 42a) ménagés dans ledit support fixe (4).

17. Dispositif de commande de pas selon la revendication 16, caractérisé en ce que l'une au moins desdites canalisations (41, 42) reliant un collecteur hydraulique (27) à au moins un circuit hydraulique du giravion est reliée à un bloc hydraulique (40) de raccordement audit circuit hydraulique, ledit bloc (40) étant fixé sur la structure (6) du giravion et assurant l'alimentation à haute pression dudit collecteur (27) et/ou le retour à basse pression à partir de ce dernier.

18. Dispositif de commande de pas selon l'une des revendications 14 à 17, telle que rattachée à la revendication 2, caractérisé en ce qu'au moins un collecteur hydraulique (27) est annulaire et intercalé entre ledit support tournant (25) et ledit support fixe (4), dans l'un au moins desquels il est partiellement intégré.

19. Dispositif de commande de pas selon la revendication 18, caractérisé en ce qu'au moins un collecteur hydraulique (27) est implanté entre deux roulements (26) espacés axialement autour du mât rotor (1) et par lesquels ledit support tournant (25) est monté en rotation sur ledit support fixe (4).

20. Dispositif de commande de pas selon l'une des revendications 14 à 19, telle que rattachée à la revendication 2, caractérisé en ce qu'au moins un collecteur hydraulique (77) est du type comportant un joint de transfert rotatif (115) de fluide hydraulique sous haute pression entre deux organes sensiblement coaxiaux (54a, 75a), entraînés en rotation relative l'un dans l'autre, dont l'un (75a) est solidaire en rotation du support tournant (75) et l'autre (54a) du support fixe (54).

21. Dispositif de commande de pas selon la revendication 20, caractérisé en ce que ledit joint de transfert rotatif (115) comporte deux organes annulaires de révolution sensiblement coaxiaux (116-117, 118), dont l'un (116-117) est en contact radial avec le support fixe (54) par deux joints d'étanchéité statique (120) axialement espacés de part et d'autre d'une rainure de distribution (121) ménagée de révolution sur cet organe, et en regard d'une rainure de distribution (122) du support fixe (54), dans laquelle débouche au moins un canal (89a) interne à ce dernier et en communication avec une canalisation d'alimentation à haute pression (89b), l'autre organe (118) étant en contact radial avec le support tournant (75) également par deux joints d'étanchéité statique (124) axialement espacés de part et d'autre d'une rainure de distribution (125), ménagée de révolution sur cet organe (118) et en regard d'une rainure de distribution (126) du support tournant (75), dans laquelle débouche au moins un canal (86) interne à ce dernier, pour l'alimentation à haute pression d'au moins une servo-valve (84) de commande d'un vérin (79), l'un (118) des deux organes entourant, avec un faible jeu radial (134), une partie axiale (117) de l'autre et portant une couronne (119) de révolution, en saillie axiale et radiale par rapport à l'organe (118) qui la porte, et engagée avec du jeu dans une gorge de révolution ménagée dans l'autre organe (116-117), en formant, en regard des deux organes et entre ces derniers, des fentes d'étanchéité radiales et coplanaires, s'étendant de part et d'autre d'une rainure de transfert de distribution (127) ménagée de révolution dans l'autre organe (116-117), et en communication avec l'autre rainure de distribution (121) de cet autre organe (116-117) par au moins un canal (128) interne à ce dernier, tandis que la couronne (119) est percée d'un canal de transfert (129) débouchant, à une extrémité, en regard de ladite rainure de transfert de distribution (127), et, à l'autre extrémité, en regard d'un canal (130-131) percé dans l'organe (118) portant la couronne (119) et en communication avec l'autre rainure de distribution (125) de cet organe (118).

22. Dispositif de commande de pas selon l'une des revendications 14 à 21, caractérisé en ce qu'au moins un collecteur hydraulique (77) comprend une chambre collectrice d'extrémité (133) délimitée entre lesdits supports fixe (54) et tournant (75), pour la récupération du débit de fuite du collecteur (77) et dans laquelle débouchent, d'une part, au moins un canal (87) interne au support tournant (75) et en communication avec le retour à basse pression d'au moins une servo-valve (84), et, d'autre part, au moins un canal (90a) interne au support fixe (54) et en communication avec une conduite (90b) de retour à basse pression vers au moins un circuit hydraulique.

23. Dispositif de commande de pas selon l'une des revendications 1 à 22, caractérisé en ce que chaque vérin (29) comprend au moins deux corps en tandem, dont chacun est commandé par l'une respectivement d'un nombre égal de servo-valves (36) de commandes correspondantes, dont chacune est alimentée par l'un respectivement d'un nombre égal de collecteurs hydrauliques (27) superposés, en communication chacun avec l'un respectivement d'un nombre égal de circuits hydrauliques du giravion.

24. Dispositif de commande de pas selon l'une des revendications 1 à 23, caractérisé en ce que chaque servo-valve (36) de commande du vérin (29) de chaque pale (7) du rotor est elle-même commandée par des ordres provenant d'au moins un collecteur électrique et/ou optique (44) monté au moins partiellement en repère tournant dans et/ou sur le mât rotor (1), et élaborés à partir de signaux délivrés par au moins un capteur (43) de la position angulaire de la pale (7) correspondante autour de son axe de changement de pas (X-X), et/ou par au moins un capteur (45) de déplacement linéaire de la tige (31) du vérin correspondant (29) par rapport à son cylindre (30).

## Patentansprüche

1. Vorrichtung zur Einzelsteuerung des Anstellwinkels der Blätter (7) eines Drehflügelrotors, mit einem linearen, elektrohydraulischen, doppelt wirkenden Zylinder (29) für jedes Blatt (7) des Rotors und wenigstens einem Körper zur Steuerung der monozyklischen und ggf. multizyklischen Gesamteinstellung bei rotierendem Bezugssystem des Blattes, wobei dieser Zylinder (29) mit dem Rotor um dessen Achse (A) mit einer Drehbewegung angetrieben wird sowie im wesentlichen in Längsrichtung in Bezug auf den Rotormast (1) außerhalb von diesem angeordnet ist, dadurch gekennzeichnet, daß jeder Zylinder (29) mit einem seiner zwei Elemente, die sein Zylindergehäuse (30) und seine Stange (31) bilden, auf einem Drehträger (25) aufgesetzt ist, welcher den Rotormast (1) umgibt und mit dem Rotor um die Achse (A) desselben mit einer Drehbewegung angetrieben wird, während das andere Element des Zylinders (29) an den Einstellwinkel-Steuerhebel (24) des entsprechenden Blattes angeschlossen ist, wobei der Drehträger (15) unter der Ebene des Rotors angeordnet ist.

2. Einstell-Steuervorrichtung nach Anspruch 1, dadurch gekennzeichnet, daß der Drehträger (25) drehbar mittels wenigstens eines Lagers (26) um einen festen Träger (4) aufgebaut ist, wobei er den Rotormast (1) dreht und fest mit der Struktur (6) des Drehflügelgerätes verbunden ist.

3. Einstell-Steuervorrichtung nach Anspruch 2, dadurch gekennzeichnet, daß der feste Träger (4) ein rohrförmiger Träger ist, worin der Mast (1) drehbeweglich (3) um seine Achse (A) gelagert ist.

4. Einstell-Steuervorrichtung nach einem der Ansprüche 1 bis 3, dadurch gekennzeichnet, daß der Drehträger (25) fest mit der Nabe (2) des Rotors verbunden ist und durch die genannten Mittel (2) in Drehung versetzt wird.

5. Einstell-Steuervorrichtung nach einem der Ansprüche 1 bis 3, dadurch gekennzeichnet, daß der Drehträger (75) fest mit dem Rotormast (51) verbunden ist und durch diesen in Drehung versetzt wird.

6. Einstell-Steuervorrichtung nach einem der Ansprüche 1 bis 5, dadurch gekennzeichnet, daß jeder Zylinder (29) mit seinem Zylindergehäuse (30) in den Drehträger (25) integriert und mit seiner Stange (31) an den entsprechenden Einstell-Steuerhebel angeschlossen ist.

7. Einstell-Steuervorrichtung nach Anspruch 6, dadurch gekennzeichnet, daß die Stange (31) des Zylinders (29) über ein Pleuel (33) an den entsprechenden Einstell-Steuerhebel (24) angekoppelt ist.

8. Einstell-Steuervorrichtung nach Anspruch 6, dadurch gekennzeichnet, daß die Stange (81) des Zylinders (79) wenigstens teilweise rohrförmig ausgebildet und auf der Seite ihres oberen Endes offen ist und daß ein Einstell-Steuerpleuel (109) an seinem unteren Ende über eine Gelenkkugel (108) in der rohrförmigen Stange (81) gelenkig angeschlossen ist und an ihrem oberen Ende (111) an dem entsprechenden Einstell-Steuerhebel (113) angeschlossen ist.

9. Einstell-Steuervorrichtung nach einem der Ansprüche 1 bis 8, dadurch gekennzeichnet, daß die Stange (31) des Zylinders (29) in oder auf einem Melder (43) für die lineare Bewegung der Stange (31) in Bezug auf das Zylindergehäuse (30) befestigt ist, wobei dieser Melder (43) durch den Drehträger (25) gestützt wird.

10. Einstell-Steuervorrichtung nach Anspruch 9, soweit dieser auf Anspruch 6 rückbezogen ist, dadurch gekennzeichnet, daß die Stange (81) des Zylinders (79) auf der Seite ihres unteren Endes verschiebbar auf einer Stange (96) gelagert ist, die an dem Drehträger (75) befestigt ist und zu einem Melder (91) für die lineare Bewegung der Stange (81) des Zylinders (79) in Bezug auf das entsprechende Zylindergehäuse (80) gehört.

11. Einstell-Steuervorrichtung nach einem der Ansprüche 1 bis 10, dadurch gekennzeichnet, daß jedes Gehäuse jedes Zylinders (29) mit Hydraulikfluid über wenigstens ein elektrodynamisches Steuer-Servoventil (36) gespeist wird, das gleichfalls bei rotierendem Bezugssystem gelagert ist und von dem Drehträger (25) getragen wird.

12. Einstell-Steuervorrichtung nach Anspruch 11, dadurch gekennzeichnet, daß wenigstens ein Servoventil (36) in den Drehträger (25) integriert oder auf diesen aufgesetzt ist.

13. Einstell-Steuervorrichtung nach einem der Ansprüche 11 und 12, dadurch gekennzeichnet, daß wenigstens ein Servoventil (36) an den Zylinder (29), welchen es steuert, über Hydraulikleitungen (37a, 37b) angeschlossen ist, die wenigstens teilweise durch Kanäle gebildet sind, die in dem Drehträger (25) ausgebildet sind.

14. Einstell-Steuervorrichtung nach einem der Ansprüche 11 bis 13, dadurch gekennzeichnet, daß die Servoventile (36) mit Hydraulikfluid über wenigstens einen Hydraulikkreis versorgt werden, der bei festem Bezugssystem auf der Struktur (6) des Drehflügelgerätes über wenigstens einen Übergabe-Hydraulik-Kollektor (27) angebracht ist, der wenigstens teilweise in den Drehträger (25) aufgenommen ist.

15. Einstell-Steuervorrichtung nach Anspruch 14, dadurch gekennzeichnet, daß wenigstens ein Hydraulik-Kollektor (27) in Verbindung mit wenigstens einem Servoventil (36) über Hydraulikleitungen (38, 39) steht, die wenigstens teilweise durch die Kanäle (38a, 39a) gebildet sind, welche in dem Drehträger (25) angebracht sind.

16. Einstell-Steuervorrichtung nach Anspruch 14 oder 15, soweit auf Anspruch 2 rückbezogen, dadurch gekennzeichnet, daß wenigstens ein Hydraulik-Kollektor (27) in Verbindung mit wenigstens einem Hydraulikkreis des Drehflügelgerätes über Hydraulikleitungen (41, 42) steht, die wenigstens teilweise durch Kanäle (41a, 42a) gebildet sind, welche in dem festen Träger (4) angebracht sind.

17. Einstell-Steuervorrichtung nach Anspruch 16, dadurch gekennzeichnet, daß wenigstens eine der Leitungen (41, 42), die einen Hydraulik-Kollektor (27) mit wenigstens einem Hydraulikkreis des Drehflügelgerätes verbindet, an einen Hydraulikblock (40) zur Verbindung mit dem Hydraulikkreis angeschlossen ist, wobei dieser Block (41) auf der Struktur (6) des Drehflügelgerätes befestigt ist und die Hochdruckspeisung des Kollektors (27) und/oder den Niederdruckrücklauf aus diesem gewährleistet.

18. Einstell-Steuervorrichtung nach einem der Ansprüche 14 bis 17, soweit auf Anspruch 2 rückbezogen, dadurch gekennzeichnet, daß wenigstens ein Hydraulik-Kollektor (27) ringförmig ausgebildet und zwischen dem Drehträger (25) und dem festen Träger (4) eingefügt ist, wobei er wenigstens in einen von diesen teilweise integriert ist.

19. Einstell-Steuervorrichtung nach Anspruch 18, dadurch gekennzeichnet, daß wenigstens ein Hydraulikkollektor (27) zwischen zwei Lagern (26) eingesetzt ist, die axial um den Rotormast (1) beabstandet sind und mittels welchen der Drehträger (25) drehbeweglich auf dem festen Träger (4) gelagert ist.

20. Einstell-Steuervorrichtung nach einem der Ansprüche 14 bis 19, soweit auf Anspruch 2 rückbezogen, dadurch gekennzeichnet, daß wenigstens ein Hydraulik-Kollektor (77) von solcher Art ist, daß er eine Drehkupplung (115) zur Überleitung von Hydraulikfluid unter hohem Druck zwischen zwei im wesentlichen koaxialen Elementen (54a, 75a) umfaßt, die in Relativdrehung zueinander sind und von denen das eine (75a) drehfest mit dem Drehträger (75) und das andere (54a) mit dem festen Träger (54) verbunden ist.

21. Einstell-Steuervorrichtung nach Anspruch 20, dadurch gekennzeichnet, daß die Drehkupplung (115) zwei rotationssymmetrische ringförmige Elemente aufweist, die im wesentlichen koaxial sind (116-117, 118), von denen das eine (116-117) radial in Berührung mit dem festen Träger (54) über zwei statische Dichtungen (120) steht, die axial beiderseits einer Verteilungsrille (121) beabstandet sind, die rotationssymmetrisch an diesem Element angebracht ist und einer Verteilungsrille (122) des festen Trägers (54) gegenüber liegt, worin wenigstens ein innerer Kanal (89a) desselben ausmündet, der mit einer Hochdruck-Speiseleitung (89b) in Verbindung steht, wobei das andere Element (118) radial in Berührung mit dem Drehträger (75) gleichfalls über zwei statische Dichtungen (124) steht, die axial beiderseits einer Verteilungsrille (125) beabstandet sind, die rotationssymmetrisch an diesem Element (118) angebracht ist und einer Verteilungsrille (126) des Drehträgers (75) gegenüber liegt, worin wenigstens ein im Inneren desselben ausgebildeter Kanal (86) ausmündet, zur Hochdruck-Speisung wenigstens eines Servoventils (84) zur Steuerung eines Zylinders (79), wobei eines (118) der beiden Elemente mit geringem radialen Spiel (134) einen axialen Teil (117) des anderen umgibt und einen rotationssymmetrischen Kranz (119) trägt, der axial und radial in Bezug auf das ihn tragende Element (118) übersteht sowie mit Spiel in eine rotationssymmetrische Nut eingesetzt ist, die in dem anderen Element (116-117) ausgebildet ist, wobei er gegenüber den beiden Elementen und zwischen diesen radiale koplanare Abdichtungsschlitze bildet, die sich beiderseits einer Verteilungs-Übergaberille (127) befinden, die rotationssymmetrisch in dem anderen Element (116-117) angebracht ist und in Verbindung mit einer Verteilungsrille (121) dieses anderen Elementes (116-117) über wenigstens einen im Inneren desselben ausgebildeten Kanal (128) steht, während der Kranz (119) mit einem darin angebrachten Übergabekanal (129) versehen ist, der an einem Ende gegenüber der Verteilungs-Übergaberille (127) ausmündet und am anderen Ende gegenüber einem Kanal (130-131) mündet, der in dem Element (118) angebracht ist, welches den Kranz (119) trägt, sowie mit der anderen Verteilungsrille (125) dieses Elementes (118) in Verbindung steht.

22. Einstell-Steuervorrichtung nach einem der Ansprüche 14 bis 21, dadurch gekennzeichnet, daß wenigstens ein Hydraulik-Kollektor (77) eine endseitige Sammelkammer (133) aufweist, die zwischen dem festen Träger (54) und dem Drehträger (75) begrenzt ist, um die Leckströmung aus dem Kollektor (77) aufzufangen, und worin einerseits wenigstens ein Kanal (87) aus dem Drehträger (75) mündet, der in Verbindung mit dem Niederdruck-Rücklauf wenigstens eines Servoventils (84) steht, und andererseits wenigstens ein Kanal (90a) aus dem Inneren des festen Trägers (54) mündet, der mit einer Niederdruck-Rücklaufleitung (90b), die zu wenigstens einem Hydraulikkreis führt, in Verbindung steht.

23. Einstell-Steuervorrichtung nach einem der Ansprüche 1 bis 22, dadurch gekennzeichnet, daß jeder Zylinder (29) wenigstens zwei Tandem-Körper aufweist, von denen jeder durch ein entsprechendes Steuer-Servoventil (36) gesteuert wird, die in gleicher Anzahl vorhanden sind und von denen jedes aus einem entsprechenden Hydraulikkollektor (27) versorgt wird, die in gleicher Anzahl vorhanden und übereinander angeordnet sind sowie jeweils mit einer gleichen Anzahl von Hydraulikkreisen des Drehflügelgerätes in Verbindung stehen.

24. Einstell-Steuervorrichtung nach einem der Ansprüche 1 bis 23, dadurch gekennzeichnet, daß jedes Servoventil (36) zur Steuerung des Zylinders (29) jedes Blattes des Rotors seinerseits durch Befehle gesteuert wird, die aus wenigstens einem elektrischen und/oder optischen Kollektor (44) stammen, der wenigstens teilweise bei rotierendem Bezugssystem in und/oder auf dem Rotormast (1) angebracht ist, wobei diese Befehle aus Signalen gebildet werden, die wenigstens einen Melder (43) für die Winkelstellung des entsprechenden Blattes (7) um seine Einstellachse (X-X) und/oder wenigstens ein Melder (45) für die lineare Bewegung der Stange (31) des entsprechenden Zylinders (29) in Bezug auf sein Gehäuse (30) abgibt.

**Claims**

1. An individual pitch control device for the blades (7) of a rotor of a rotor craft, comprising, for each blade (7) of the rotor, a dual-action, electrohydraulic linear jack (29) with at least one body, for controlling the collective, monocyclic and, if appropriate, multicyclic pitch in a rotating reference system of said blade, said jack (29) being driven in rotation with the rotor about the axis (A) of the latter and disposed substantially longitudinally with respect to the rotor mast (1), and outside the latter, characterised in that each jack (29) is implanted, via one of the two elements formed by its cylinder (30) and its rod (31), on a rotating support, (25) surrounding the rotor mast (1) and driven in rotation with the rotor about the axis (A) of the latter, whilst the other element of the jack (29) is connected to the picht control lever (24) of the corresponding blade, said rotating support (25) being provided below the rotor plane.

2. The pitch control device as claimed in claim 1, characterised in that said rotating support (25) is mounted in rotation, via at least one bearing (26), about a fixed support (4), surrounding the rotor mast (1) and integrally attached to the structure (6) of the rotor craft.

3. The pitch control device as claimed in claim 2 characterised in that said fixed support (4) is a tubular support in which said rotor mast (1) is mounted in rotation (3) about its axis (A) .

4. The pitch control device as claimed in any one of claims 1 to 3, characterised in that said rotating support (25) is integrally attached to the hub (2) of the rotor and driven in rotation by said hub (2).

5. The pitch control device as claimed in any one of claims 1 to 3, characterised in that said rotating support (75) is integrally attached to the rotor mast (51) and driven in rotation by the latter.

6. The pitch control device as claimed in any one of claims 1 to 5, characterised in that each jack (29) is integrated via its cylinder (30) into said rotating support (25) and connected via its rod (31) to said corresponding pitch control lever.

7. The pitch control device as claimed in claim 6, characterised in that the rod (33) of the jack (29) is coupled by means of a rod (33) to the corresponding pitch control lever (24).

8. The pitch control device as claimed in claim 6, characterised in that the rod (81) of the jack (79) is at least partially tubular and open on the side of its upper end, and wherein a pitch control rod (109) is articulated, at its lower end and by means of a pivot (108), in the tubular rod (81), and via its upper end (111) on the corresponding pitch control lever (113).

9. The pitch control device as claimed in any one of claims 1 to 8, characterised in that the rod (31) of the jack (29) is engaged in or on a sensor (43) of linear displacemnt of said rod (31) with respect to said cylinder (30), said sensor (43) being supported by said rotating support (25).

10. The pitch control device as claimed in claim 9 as attached to claim 6, characterised in that, on the side of its lower end, the rod (81) of the jack (79) is mounted so as to slide on a rod (96) fixed to the rotating support (75) and belonging to a sensor (91) of linear displacement of the rod (81) of the jack (89) with respect to the corresponding cylinder (80).

11. The pitch control device as claimed in any one of claims 1 to 10, characterised in that each body of each jack (29) is supplied with hydraulic fluid via at least one electrohydraulic control servovalve (36), also mounted in a rotating reference system and supported by said rotating support (25).

12. The pitch control device as claimed in claim 11, characterised in that at least one servovalve (36) is integrated in or attached on said rotating support (25).

13. The pitch control device as claimed in any one of claims 11 or 12, characterised in that at least one servovalve (36) is connected to the jack (29) which it controls by hydraulic pipes (37a,37b) formed at least partially by channels made in said rotating support (25).

14. The pitch control device as claimed in claims 11 to 13, characterised in that the servovalves (36) are supplied with hydraulic fluid from at least one hydraulic circuit mounted in a fixed reference system on the structure (6) of the rotor craft by means of at least one hydraulic transfer collector (27), at least partially accommodated in said rotating support (25).

15. The pitch control device as claimed in claim 14, characterised in that at least one hydraulic collector (27) is in communication with at least one servovovalve (36) via hydraulic pipes (38,39) formed at least partially by channels (38a, 39a) made in said rotating support (25).

16. The pitch control device as claimed in any one of claims 14 to 15 as attached to claim 2, characterised in that at least one hydraulic collector (27) is in communication with at least one hydraulic circuit of the rotor craft via hydraulic pipes (41, 42) formed at least partially by channels (41a, 42a) made in said fixed support (4).

17. The pitch control device as claimed in claim 16, characterised in that at least one of said pipes (41, 42) connecting a hydraulic collector (27) to at least one hydraulic circuit of the rotor craft is connected to a hydraulic unit (40) connecting to said hydraulic circuit, said unit (40) being fixed on the structure (6) of the rotor craft and ensuring the high-pressure supply of said collector (27) and/or the low-pressure return form the latter.

18. The pitch control device as claimed in any one of claims 14 to 17 as attached to claim 2, characterised in that at least one hydraulic collector (27) is annular and inserted between said rotating support (25) and said fixed support (4), in at least one of which it is partially integrated.

19. The picht control device as claimed in claim 18, characterised in that at least one hydraulic collector (27) is implanted between two bearings (26) spaced axially about the rotor mast (1), and via which said rotating support (25) is mounted in rotation on said fixed support (4).

20. The pitch control device as claimed in any one of claims 14 to 19 as attached to claim 2, characterised in that at least one hydraulic collector (77) is of the type comprising a rotating joint (115) for transferring hydraulic fluid under high pressure between two substantially coaxial members (54a, 75a), driven in relative rotation one inside the other, one (75a) of which is integrally attached in rotation to the rotating support (75) and the other (54a) of which is integrally attached in rotation to the fixed support (54).

21. The pitch control device as claimed in claim 20, characterised in that said rotating transfer joint (115) comprises two susbtantially coaxial annular members of revolution (116-117, 118), one (116-117) of which is in radial contact with the fixed support (54) via two static seals (120), axially spaced on either side of a distribution groove (121) of revolution made on this member, and opposite a distribution groove (122) of the fixed support (54), in which emerges at least one channel (89a) internal to the latter and in communication with a high-pressure supply pipe (89b), the other member (118) being in radial contact with the rotating support (75), also via two static seals (124) axially spaced on either side of a distribution groove (125) of revolution made on this member (118), and opposite a distribution groove (126) of the rotating support (75), in which emerges at least one channel (86) internal to the latter for the high-pressure supply of at least one control servovalve (84) of a jack (79), one (118) of the two members surrounding, with a slight radial play (134), an axial part (117) of the other and carrying a ring of revolution (119) projecting axially and radially with respect to the member (118) carrying it and which is engaged with play in a groove of revolution made in the other member (116-117) and forming, opposite the two members and between the latter, radial and coplanar sealing slits extending on either side of a distribution transfer groove of revolution (127) made in the other member (116-117) and in communication with the other distribution groove (121) of this other member (116-117) via at least one channel (128) internal to the latter, while the ring (119) is pierced with a transfer channel (129), emerging at one end, opposite said distribution transfer groove (127) and, at the other end, opposite a channel (130-131) pierced in the member (118) carrying the ring (119) and in communication with the other distribution groove (125) of this member (118).

22. The pitch control device as claimed in any one of claims 14 to 21, characterised in that at least one hydraulic collector (77) comprises an end collecting chamber (133) delimited between said fixed (54) and rotating (75) supports, for the recovery of the leakage flow from the collector (77) and in which emerge, on the one hand, at least one channel (87) internal to the rotating support (75) and in communication with the low-pressure return of at least one servovalve (84) and, on the other hand, at least one channel (90a) internal to the fixed support (54) and in communication with a low-presure return conduit (90b) towards at least one hydraulic circuit.

23. The pitch control device as claimed in any one of claim 1 to 22, characterised in that each jack (29) comprises at least two bodies in tandem, each of which is controlled by one respectively of an equal number of corresponding control servovalves (36), each of which is supplied by one respectively of an equal number of superposed hydraulic collectors (27), each in communication with one respectively of an equal number of hydraulic circuits of the rotor craft.

24. The pitch control device as claimed in any one of claim 1 to 23, characterised in that each control servovalve (36) of the jack (29) of each blade (7) of the rotor is itself controlled by orders originating from at least one electrical and/or optical collector (44) mounted at least partially in a rotating reference system in and/or on the rotor mast (1) and produced from signals supplied by at least one sensor (43) of the angular position of the corresponding blade (7) about its pitch change axis-(X-X) and/or by at least one sensor (45) of linear displacement of the rod (31) of the corresponding jack (29) with respect to its cylinder (30).

FIG. 1

FIG. 2

FIG. 3